# EUROPEAN PATENT SPECIFICATION

(11) **EP 2 316 679 B1**
(45) Date of publication and mention of the grant of the patent: **25.07.2012**
(21) Application number: 10013781.9
(22) Date of filing: 19.10.2010
(51) Int. Cl.: B60J 7/14

(54) **Movable roof structure of a vehicle, method of providing the same and vehicle equipped therewith**
Bewegliche Dachstruktur eines Fahrzeugs, Verfahren zu seiner Bereitstellung und Fahrzeug damit
Structure de toit amovible d'un véhicule, procédé pour le fournir et véhicule équipé de celle-ci

(30) Priority: 22.10.2009 JP 2009243020; 22.10.2009 JP 2009243021; 26.10.2009 JP 2009245590
(43) Date of publication of application: 04.05.2011
(73) Proprietor: Mazda Motor Corporation, Aki-gun Hiroshima 730-8670 (JP)
(72) Inventor: Hashimoto, Satoru, Aki-gun Hiroshima 730-8670 (JP); Nakamura, Yukio, Aki-gun Hiroshima 730-8670 (JP); Mori, Shigeyuki, Aki-gun Hiroshima 730-8670 (JP); Toda, Isao, Aki-gun Hiroshima 730-8670 (JP)
(74) Representative: Müller-Boré & Partner Patentanwälte

(56) References cited:
- EP-A2- 1 914 098
- DE-A1- 1 945 559
- DE-A1-102008 023 514
- DE-A1-102008 063 144
- FR-A1- 2 859 140
- FR-A1- 2 891 203
- US-A- 2 181 869
- US-A- 5 033 789
- US-A1- 2008 197 665
- US-A1- 2008 258 491

## Description

The present invention relates to a movable roof structure of a vehicle, a method of providing the same and a vehicle equipped therewith, such as an open car, in which a roof member covering over an upper part of a vehicle compartment can be opened.

Japanese Patent Laid-Open Publication No. 2007-261405 or EP2006139 A1, for example, discloses an example of the above-described movable roof structure. Herein, a roof member comprises three split parts of a front roof panel, a middle roof panel, and a back window. These roof panels are foldable so as to be stored in a storage chamber, and a deck cover is further provided so as to cover over the stored roof panels for securing a good appearance. These three roof panels are connected via a link mechanism, and in order to operate these roof panels electrically, a drive motor as a drive source and a gear mechanism to transmit a rotation of this motor to the above-described link mechanism are provided.

The above-described structure with an electrically-operational mechanism, however, has a problem in that it would become complex, its parts number, weight, and costs would be improperly increased, and its handling would be poor.

US 2008/197665 A1 discloses a retractable vehicle roof system for a vehicle having a rearward storage space including a roof portion movable between a closed position and an open position. The roof portion is located above a body of the vehicle and proximate the rearward storage space when in the closed position. A lid is located above the rearward storage space when the roof portion is in the closed position. The lid is configured to descend into the storage space as the roof portion moves to the open position above the lid while substantially preserving a side profile of the vehicle and permitting storage space access. The roof portion is located above the lid when the roof portion is in the open position. A glide control arrangement is operatively connected to the lid and configured to direct motion of the lid when the roof portion moves between the open and closed positions.

The present invention has been devised in view of the above-described problem, and an object of the present invention is to provide a movable roof structure of a vehicle which can properly improve its operation and handling and decrease its operational force, with a simple and light mechanism.

The object is solved by the features of the independent claims. Preferred embodiments of the present invention are subject of the dependent claims.

According to the present invention, there is provided a movable roof structure of a vehicle, comprising a roof member provided so as to be positioned in a closing state to cover over an upper part of a vehicle compartment and an open state to open the upper part of the vehicle compartment, the roof member comprising a plurality of split sub roof members which are connected, at least one of which is made of a board-shaped hard roof member; the roof member being stored in a storage portion at a rear part of the vehicle compartment in a state in which the sub roof members are folded when being in the open state, an operational member to be operated by a passenger, the operational member being provided at a front-side member of the sub roof members, preferably at a specified position of the front-side member, so as to transmit an opening-operational force or a closing-operation force by the passenger to the sub roof members for opening or closing the roof member.

According to the above-described invention, since the roof member comprising the plural split sub roof members which are connected is provided and its opening or closing is manually operated (handled) by a passenger, the mechanism for opening or closing the roof member can be properly simple and light, and also its operation and handling can be improved and its operational force can be decreased. Further, since the operational member is provided so as to be operated by a passenger and movable relatively to the roof member, the operation and handling of the roof member by the passenger can be further improved.

Preferably, the moveable roof structure further comprises a moving mechanism provided to position the operational member such that the operational member is movable relatively to the roof member.

According to an embodiment of the present invention, the moving mechanism positions the operational member such that the operational member is movable relatively to the roof member substantially in a vehicle width direction. Thereby, since the operational member is movable relatively to the roof member substantially in the vehicle width direction, the passenger can easily grip and operate or handle the operational member, which is a grip member, for example, regardless of the position of the passenger's body or the passenger's own arm joint characteristics.

Herein, the above-described operational member may comprise a cylindrical member, and the moving mechanism may comprises a shaft member which is fixed at the front-side member of the sub roof members so as to extend substantially in the vehicle width direction and guide the cylindrical member by being inserted into a central hole of the cylindrical member.

According to another embodiment of the present invention, the roof member comprises two sub roof members which are connected to each other. Thereby, since the roof member is comprised of two split members, the structures of the roof member and the open roof mechanism can be simpler and lighter and the storage space of the roof member can be simplified accordingly.

According to another embodiment of the present invention, the roof member comprises at least a front roof member and a rear roof member, and both of the front and rear roof members are preferably made of a hard roof member. Thereby, since both of the front and rear roof members are made of the hard roof member, the antitheft (burglarproof) and thereby the safety of the vehicle can be improved, and also the design for a nice-looking car can be secured.

According to another embodiment of the present invention, the roof member comprises at least a front roof member and a rear roof member, and the front roof member is made of a hard roof member. Thereby, since the front roof member, which may contribute to the safety the most, is made of the hard roof member, the vehicle is properly superior in antitheft. Further, the light weight of the vehicle can be properly achieved, compared with a case in which the whole of roof member is made of the hard roof member entirely. Additionally, since the front the front roof member is made of the hard roof member, the vehicle can be superior in car designing.

According to another embodiment of the present invention, the roof member comprises at least a front roof member and a rear roof member, and the rear roof member is made of a hard roof member. Thereby, since the rear roof member is made of the hard roof member, the appearance can be improved in case a rear window is attached to the rear roof member, and its structure can be better as well. Moreover, the light weight can be achieved, compared with a case in which the whole of roof member is made of the hard roof member entirely.

According to another embodiment of the present invention, means for allowing daylight to come into the vehicle compartment is provided at least at part of the sub roof members. Thereby, better lighting can provide comfortable circumstances in the vehicle compartment.

According to another embodiment of the present invention, at least part of the sub roof members is made of a light-transparent material. Thereby, the better lighting can be achieved with a simple structure without forming any window at the sub roof members or conducting any design changing. Herein, a semitransparent synthetic resin or a white canvas may be used as the light-transparent material.

According to another embodiment of the present invention, the roof member comprises at least a front roof member and a rear roof member, and the front roof member is made of a flexible and light-transparent material. Thereby, the light weight can be achieved, compared with a case in which the whole of roof member is made of the hard roof member entirely. Further, since the front roof member is made of the light-transparent material, the better lighting is available in accordance with the passenger's request, thereby further improve the comfortable circumstances in the vehicle compartment.

According to another embodiment of the present invention, the roof member comprises at least a front roof member and a rear roof member, and the front roof member is made of a light-transparent hard roof member. Thereby, since the front roof member, which may contribute to the safety the most, is made of the hard roof member, the vehicle is properly superior in antitheft. Further, since the front roof member has the light transparency, the better lighting is available, so that the comfortable circumstances in the vehicle compartment can be provided.

According to another embodiment of the present invention, the movable roof structure of a vehicle further comprises an assist mechanism to assist an operational force by the passenger. Thereby, since the operational force of the manual operation by the passenger is assisted (helped) by the assist mechanism, decreasing the operational force which may be necessary for the manual operation of the roof member can be achieved, so that the handling can be further improved.

According to another embodiment of the present invention, the assist mechanism assists the closing-operational force by the passenger for closing the roof member. Thereby, the operational force of closing the roof member can be decreased, so that the closing handling can be further improved. Herein, the assist mechanism may be comprised of a biasing means, such as a spring, for assisting (helping) the closing-operational force by the passenger for closing the roof member. In this case, decreasing of the operational force of closing the roof member can be achieved with a simple structure.

According to another embodiment of the present invention, the movable roof structure of a vehicle further comprises an open roof mechanism to provide a partially-open mode in which the roof member is partially open and held. Thereby, the open positions of the roof member are selectable, so that the passenger can be provided with comfortable feelings. Herein, the roof member can take a full-closing position, a partially-open position, and a full-open position.

According to another embodiment of the present invention, the open roof mechanism stops moving of the roof member in the middle of opening or closing operation of the roof member. Thereby, the passenger's having the comfortable feelings can be further improved.

According to another embodiment of the present invention, the open roof mechanism stops moving of the roof member in the middle of opening or closing operation of the roof member at any position. Thereby, adjusting the amount of outside-air induction or lighting is available in accordance with the passenger's request.

According to another embodiment of the present invention, the movable roof structure of a vehicle further comprises an opening mechanism configured to vertically move at least part of the roof member. Thereby, ventilation of the vehicle compartment can be improved.

According to another embodiment of the present invention, one of the sub roof members is movable in a vehicle longitudinal direction. Thereby, the partially-open mode can be secured when the sub roof member is moved, so that both of the outside-air induction or the ventilation of the vehicle compartment and lighting adjustment can be achieved.

According to a further aspect, there is provided a vehicle comprising a moveable roof structure, as described above.

According to a further aspect, there is provided a method of providing a movable roof structure of a vehicle, comprising the steps of:
providing a roof member so as to be positioned in a closing state to cover over an upper part of a vehicle compartment and an open state to open the upper part of the vehicle compartment, the roof member comprising a plurality of split sub roof members which are connected, at least one of which is made of a board-shaped hard roof member; the roof member being stored in a storage portion at a rear part of the vehicle compartment in a state in which the sub roof members are folded when being in the open state;
providing an operational member to be operated by a passenger at a front-side member of the sub roof members, the operational member being adapted to transmit an opening-operational force or a closing-operation force by the passenger to the sub roof members for opening or closing the roof member.

Preferably, the method further comprises the step of providing a moving mechanism adapted to position the operational member such that the operational member is movable relatively to the roof member.

Other features, aspects, and advantages of the present invention will become apparent from the following description which refers to the accompanying drawings.
FIG. **1** is a side view showing a movable roof structure of a vehicle according to a first embodiment not covered by the claims.
FIG. **2** is a plan view of a major part of FIG. **1****.**
FIG. **3** is an elevation view showing an arrangement structure of a rollover protecting member.
FIG. **4** is a perspective view showing a surrounding structure of a rear wheel house on the right of the vehicle and a wheel house reinforcement.
FIG. **5** is an exploded perspective view of respective gussets.
FIG. **6** is a partial enlarged sectional view of FIG. **3****.**
FIG. **7** is a side view in a roof-closed state.
FIG. **8** is a side view in a roof-popped-up state.
FIG. **9** is a side view in a roof-open state.
FIG. **10** is a partial sectional view taken along line A-A of FIG. **9****.**
FIG. **11** is a partial sectional view taken along line B-B of FIG. **9****.**
FIG. **12** is a partial enlarged side view showing a structure of a lock mechanism.
FIG. **13** is a sectional view taken along line C-C of FIG. **12****.**
FIG. **14** is a schematic perspective view showing the movable roof structure of a vehicle.
FIG. **15** is a side view showing a movable roof structure of a vehicle according to a second embodiment not covered by the claims.
FIG. **16** is a side view in a roof-popped-up state.
FIG. **17** is a side view in a roof-open state.
FIG. **18** is a partial enlarged sectional view of FIG. **15****.**
FIG. **19** is a partial sectional view taken along line D-D of FIG. **18****.**
FIG. **20** is a side view showing a partially-open state of a front roof.
FIG. **21** is a side view showing a state in which the front roof is opened more.
FIG. **22** is a side view showing a movable roof structure of a vehicle according to a third embodiment not covered by the claims.
FIG. **23** is a side view in a roof-closed state.
FIG. **24** is a side view showing a partially-open mode of a roof member.
FIG. **25** is a side view in a roof-popped-up state.
FIG. **26** is a side view in a roof-open state.
FIG. **27** is a schematic perspective view showing the movable roof structure of a vehicle.
FIG. **28** is a side view showing a movable roof structure of a vehicle according to a fourth embodiment of the present invention.
FIG. **29** is an enlarged side view of a major part of a roof member.
FIG. **30** is a side view showing a partially-open mode of the roof member.
FIG. **31** is a side view in a roof-popped-up state.
FIG. **32** is a side view in a roof-open state.

Hereinafter, preferred embodiments of the present invention will be described referring to the accompanying drawings. It should be understood that even though embodiments are separately described, single features thereof may be combined to additional embodiments.

### EMBODIMENT 1

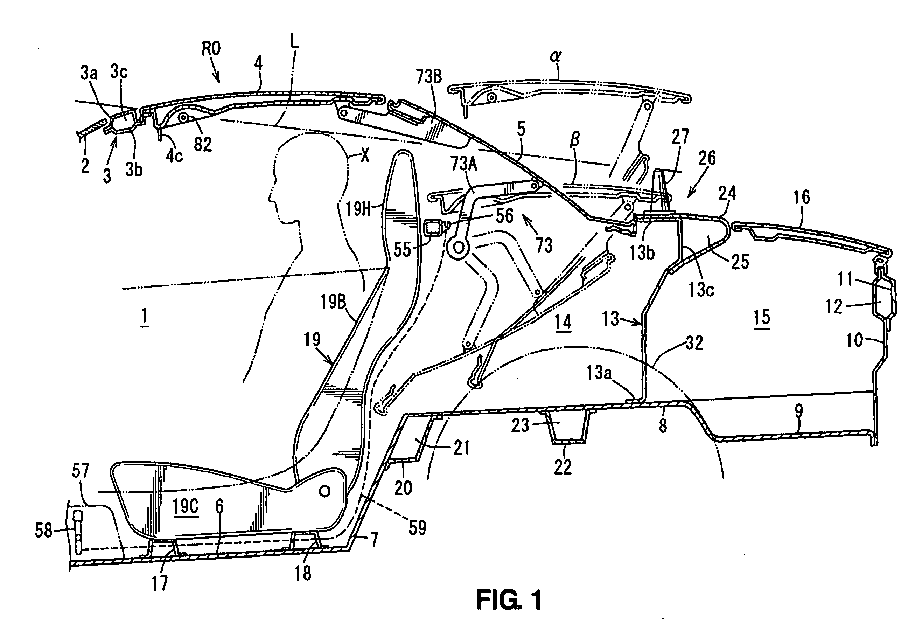

A first embodiment not covered by the claims will be described referring to FIGS. **1** through **14****.** The figures show a movable roof structure of an open car as a vehicle. In a side view of FIG. **1****,** the open car comprises a front header **3** which is a reinforcing member which extends in a vehicle width direction and supports an upper side of a windshield **2** at a front portion of a vehicle compartment **1,** and a roof member **RO** which is provided so as to extend rearwardly from the front header **3** and form an upper portion of the vehicle compartment **1.** The roof member **RO** is split into two parts, a front roof **4** and a rear roof **5.** The front and rear roofs **4, 5** are supported so as to be opened and closed. In FIG. 1, a closing state of the roofs **4, 5** is shown by solid lines, a midway state of opening of the roofs **4, 5** is shown by two-dotted broken lines α, and a state in which the roofs **4, 5** are opened and stored in a roof storage space **14** is shown by two-dotted broken lines β.

The above-described front header **3,** which is the reinforcing member having a header closed cross section **3c** which extends in the vehicle width direction and is formed by a front header outer **3a** and a front header inner **3b** which are joined to each other, is connected to a pair of hinge pillars via a pair of front pillars having a closed cross section (not illustrated) at its both ends. The front pillar and the hinge pillar are, respectively, a vehicle-body rigidity member which has the closed cross section.

Meanwhile, a floor panel **6** to form a bottom face of the vehicle compartment **1** is provided, and a rear floor **8** is provided so as to extend substantially horizontally from a rear portion of the floor panel **6** via a kick-up portion **7** which stands up obliquely upwardly and rearwardly. A spare tire pan **9** which is concaved downwardly is integrally formed with a middle portion, in the vehicle width direction, of a rear portion of the rear floor **8.** A rear end panel **10** which extends substantially vertically is integrally joined to a rear end portion of the rear floor **8.** A rear end member **11** which extends in the vehicle width direction is joined to a vehicle outside position of an upper portion of the rear end panel **10.** A rear end closed cross section **12** which extends in the vehicle width direction is formed between the rear end member **11** and the rear end panel **10,** which can increase the rigidity of a rear vehicle body.

Further, to a middle portion, in a vehicle longitudinal direction, of the above-described rear floor **8** is attached a rear bulkhead **13** which partitions a rear end of the vehicle compartment **1.** This rear bulkhead **13** extends substantially vertically, and the roof storage space **14** is formed in front of the rear bulkhead **13.** Specifically, the roof storage space **14** where the opened roof member **RO** is stored is formed between a seat for passenger **19,** which will be described below, and the rear bulkhead **13.** A baggage room, i.e., a trunk room **15,** is formed in back of the rear bulkhead **13.** An upper part of the trunk room **15** is covered with a trunk lid **16.**

The above-described roof storage space **14** is formed in back of the vehicle compartment **1,** which constitutes a storage portion for the rear roof **5** which is opened, as shown by the two-dotted broken lines in FIG. 1. Herein, the above-described rear bulkhead **13** has a joint piece **13a** which bends substantially forwardly at its lower end, and a bending portion **13b** which bends substantially forwardly at its upper end. The upper portion of the rear bulkhead **13** is preferably formed so as to have a U-shaped portion **13c** including the bending **13b,** which can increase the rigidity of the rear bulkhead **13** itself.

On the floor panel **6** is provided the seat **19** (the seat for passenger) in which a passenger is seated via plural seat brackets **17, 18** (or a cross member). This seat **19** comprises a seat cushion **19C** and a seatback **19B** integrally including a headrest **19H.** Herein, this vehicle is equipped with two seats, a driver's seat and a passenger's seat. The above-described front header **3** is the reinforcing member which extends in the vehicle width direction in front of the seat **19** arranged in the vehicle compartment **1** and supports an upper side of the windshield **2** at a front portion of the vehicle compartment **1.**

A cross member **20** extending substantially in the vehicle width direction is provided between a back face of the kick-up portion **7** and a front lower face of the rear floor **8** so as to form a substantially closed cross section **21** which extends in the vehicle width direction. Thereby, the rigidity of the lower vehicle body is increased.

Further, a rear cross member **22** extending substantially in the vehicle width direction is joined to a lower face of a middle portion, in the vehicle width direction, of the rear floor **8** so as to form a substantially closed cross section **23** which extends in the vehicle width direction. Thereby, the rigidity of the lower vehicle body is increased. Moreover, a sub frame, not illustrated, is attached to a lower portion of the rear cross member **22.**

A rear deck member **24** is joined and fixed to the U-shaped portion **13c** of the upper portion of the rear bulkhead **13** so as to cover from behind. Thereby, a rear deck closed cross section **25** extending substantially in the vehicle width direction is formed between the rear bulkhead **13** and the rear deck member **24,** thereby increasing the rigidity of a vehicle-body rear deck portion **26.** Herein, the above-described rear deck member **24** is preferably formed so as to have a U-shaped or V-shaped cross section which opens forwardly. That is, the rear deck member **24,** which is the reinforcing member extending in the vehicle width direction, is provided at the rear deck portion **26.**

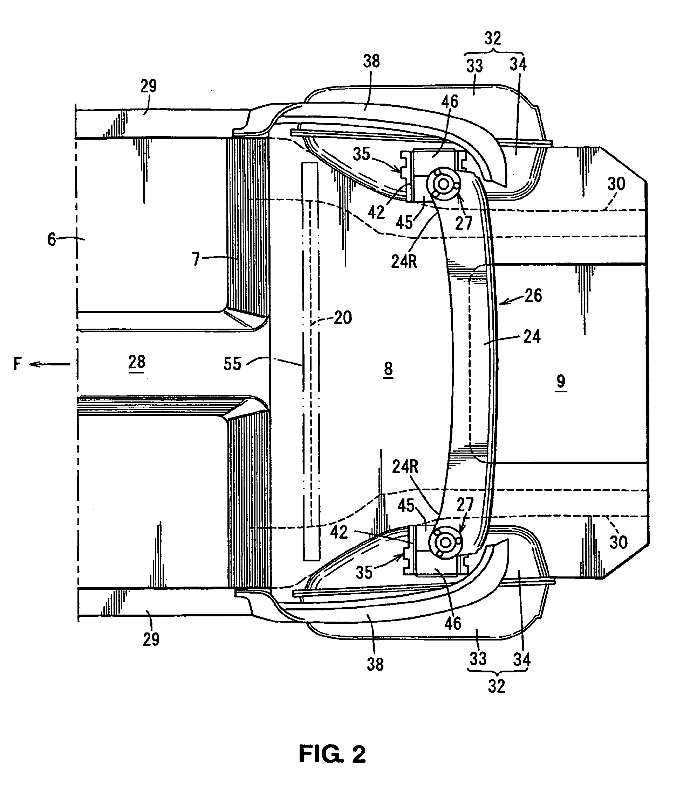

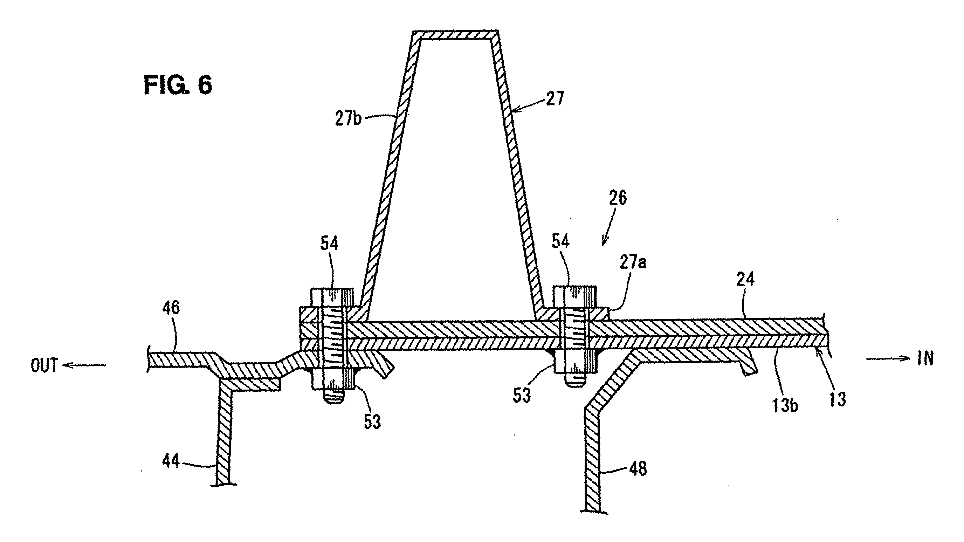

FIG. **2** is a plan view of a major part of FIG. **1****.** As shown in FIG. **2****,** the rear deck member **24** extends substantially in the vehicle width direction, and its both-side ends bend substantially forwardly so as to have forwardly-bending portions **24R, 24R.** Rollover protecting members **27, 27** are preferably attached to respective upper portions of the both forwardly-bending portions **24R, 24R.** The rollover protecting members **27** are preferably made of a hollow rigidity member, as shown in FIG. **6****,** and secure the safety of passengers by supporting the vehicle with the rollover protecting members **27** and the front header **3** in case the vehicle rolls over when the roofs **4, 5** are open. Accordingly, as shown in FIG. **1****,** the height of the rollover protecting members **27** is set so that a line **L** connecting an upper end of the rollover protecting member **27** and an upper end of the front header **3** can be located at a preferable height position for protection of the passenger **X** in the vehicle compartment **1.**

Specifically, as shown in FIG. **1****,** the height of the rollover protecting members **27** is preferably set so that the line **L** connecting the upper end of the rollover protecting member **27** and the upper end of the front header **3** can be higher than the height of the upper end of the seatback **19B** of the seat **19** arranged in the vehicle compartment **1** (the height of the headrest **19H).** Further, the rollover protecting members **27** are disposed, behind the roof storage space **14,** away from each other in the vehicle width direction (two members **27, 27** in the present embodiment shown in FIG. **2****),** and these members **27, 27** are fixed to the forwardly-bending portions **24R, 24R.**

In FIG. **2****,** a tunnel portion **28** is formed at a middle portion, in the vehicle width direction, of the floor panel **6** so as to project upwardly in the vehicle compartment **1** and extend in the vehicle longitudinal direction. Further, at both sides of the floor panel **26** are provided side sills **29, 29** which have a closed cross section, respectively. The side sill **29** is a vehicle-body rigidity member, which is formed by a side sill inner and a side sill outer which are joined to each other, extends in the vehicle longitudinal direction, and has a side-sill closed cross section extending in the vehicle longitudinal direction between the side sill inner and the side sill outer.

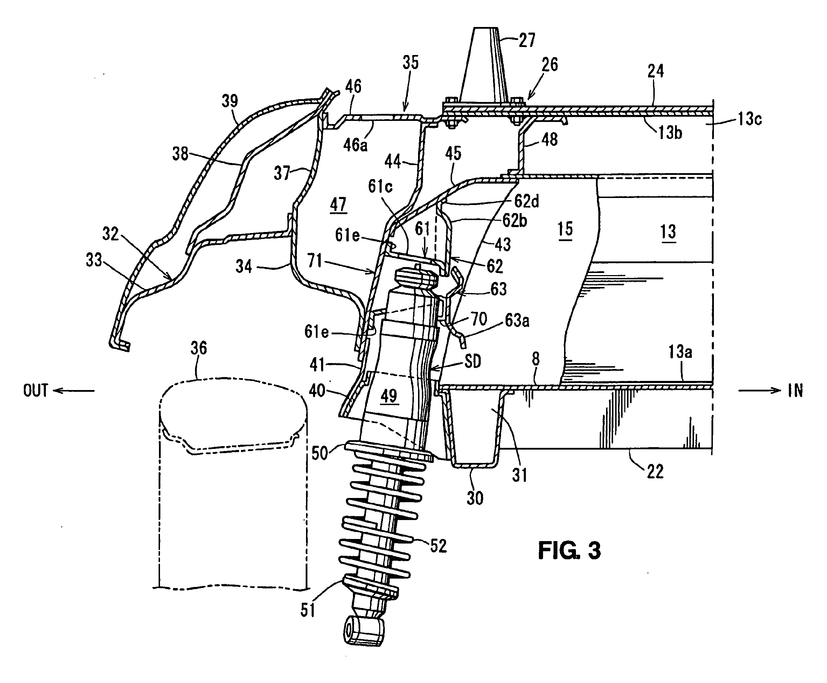

Further, rear side frames **30, 30** which are a reinforcing member extending substantially in the vehicle longitudinal direction are joined and fixed to lower portions of the both sides of the rear floor **8.** Between the rear floor **8** and the rear side frame **30** is formed a rear side closed cross section **31** (see FIG. **3****)** which extends substantially in the vehicle longitudinal direction. The rear side frame **30** increases the rigidity of the lower vehicle body.

As shown in FIG. **2****,** right and left rear wheel houses **32, 32** are formed respectively on outward sides, in the vehicle width direction, of the rear side frames **30, 30.** The rear wheel house **32** is comprised of a wheel house outer **33** and a wheel house inner **34** which are joined to each other.

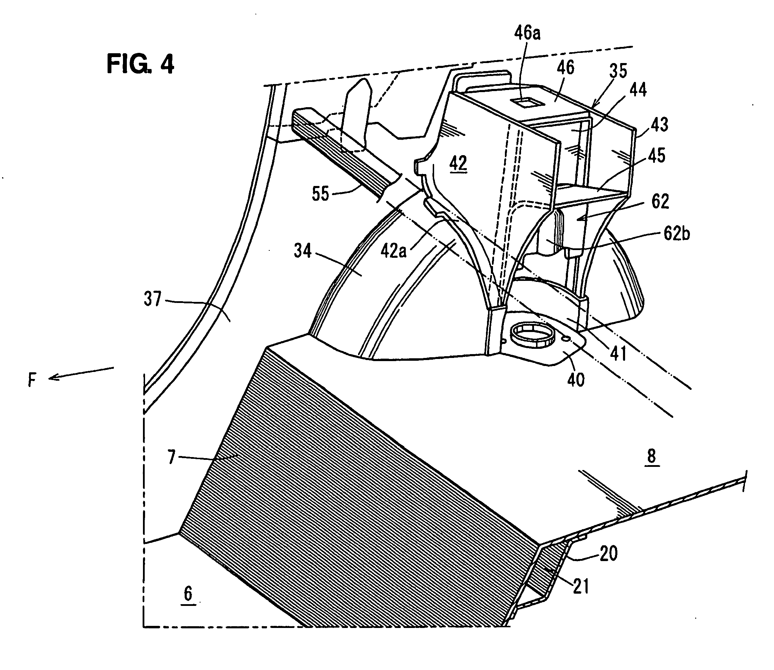

As shown in FIGS. **1** and **2****,** the rollover protecting member **27** is arranged at the rear deck portion **26** above the rear wheel house **32** at the rear portion of the vehicle compartment **1.** Thus, the rollover protecting member **27** is arranged at a specified position corresponding to the rear wheel house **32.** A wheel house reinforcement **35** to reinforce the rear wheel house **32** is preferably provided at the rear wheel house **32,** and the above-described rollover protecting member **27** is disposed at the specified position corresponding to this wheel house reinforcement **35.** The wheel house reinforcement **35** and its surrounding structure will be described referring to FIGS. **3** and **4****.**

As shown in FIG. **3****,** the rear wheel house **32** which stores the rear wheel **36** therein is formed by the wheel house outer **33** and the wheel house inner **34** which are joined to each other. An outside portion of the rear wheel house **32** is constituted by a rear fender reinforcement **38** which extends between a rear quarter panel inner **37** and the wheel house outer **33** and a rear fender **39** which is positioned on the outward side of the rear fender reinforcement **38.**

Further, as shown in FIG. **3****,** a suspension housing **40** which supports a damper **SD** of a rear suspension mechanism is formed on the outward side of the rear side frame **30.** A suspension housing gusset **41** which is of an arc shape in a plan view is joined to a skirt portion of the suspension housing **40** so as to enclose an outer periphery of the skirt portion. The suspension housing gusset **41** extends upwardly and is joined to the wheel house inner **34.**

As shown in FIG. **4****,** the suspension housing gusset **41** is also joined to a pair of package junctions **42, 43** which are away from each other longitudinally, a suspension housing reinforcement **44** which extends substantially vertically is arranged between the pair of package junctions **42, 43,** and the suspension housing reinforcement **44** is joined to the pair of package junctions **42, 43.**

These members constitute a suspension support structure. The package junctions **42, 43** have a joint flange **42a** at its lower-end edge, and are joined to inward faces of the wheel house inner **34** and the rear quarter panel inner **37** via the joint flange **42a.** Moreover, the suspension housing reinforcement **44** arranged between the package junctions **42, 43** is joined to the package junctions **42, 43.**

Further, as shown in FIG. **4****,** a junction lower member **45** is preferably arranged at a middle position, substantially in the vehicle vertical direction, of a portion between the package junctions **42, 43,** and joined to the rear bulkhead **13.**

As shown in FIG. **3****,** a junction upper member **46** is preferably arranged at an upper-end edge of the suspension housing reinforcement **44** which is positioned between the package junctions **42, 43,** and this junction upper member **46** is joined to the suspension housing reinforcement **44,** the package junctions **42, 43,** and the rear quarter panel inner **37,** respectively. The junction upper member **46** has an opening **46a**, and a shoulder belt is withdrawn into the vehicle compartment **1** from a belt retractor (not illustrated) through the opening **46a.**

The suspension housing reinforcement **44** disposed on the inward side of the wheel house inner **34** and the rear quarter panel inner **37** is preferably joined to the wheel house inner **34** at its lower end, and its upper end is joined to an inward portion of the junction upper member **46** extending horizontally. An outward end, in the vehicle width direction, of the junction upper member **46** is joined to the rear quarter panel inner **37.** Thus, a substantially closed cross section **47** is formed among the members **46, 37, 34, 44.**

The above-described package junctions **42, 43,** suspension housing reinforcement **44,** junction lower member **45,** and junction upper member **46** constitute the wheel house reinforcement **35** which reinforces the rear wheel house **32.**

As shown in FIG. **3****,** the bending portion **13b** of the upper portion of the rear bulkhead **13** is joined and fixed to the junction upper member **46** which constitutes the wheel house reinforcement **35.** Also, an anchor reinforcement **48** is attached to the U-shaped portion **13c** of the rear bulkhead **13** so as to extend substantially vertically.

Meanwhile, the damper **SD** which is coupled to the rear wheel **36** constitutes a rear suspension mechanism. Herein, a multi-link type of suspension may be applied as this rear suspension mechanism which includes an upper arm, a lower arm, a knuckle, and so on, not illustrated.

The above-described damper **SD** preferably comprises, as shown in FIG. **3****,** a cylindrical damper support **49,** an upper spring seat **50** which is joined to a lower end of the damper support **49,** a lower spring seat **51,** and a coil spring **52** which is arranged between the spring seats **50, 51.**

A first gusset **61,** a second gusset **62** and a third gusset **63** are preferably provided at the suspension housing reinforcement **44** as gusset members to support the damper support **49** which projects upwardly from the suspension housing **40.**

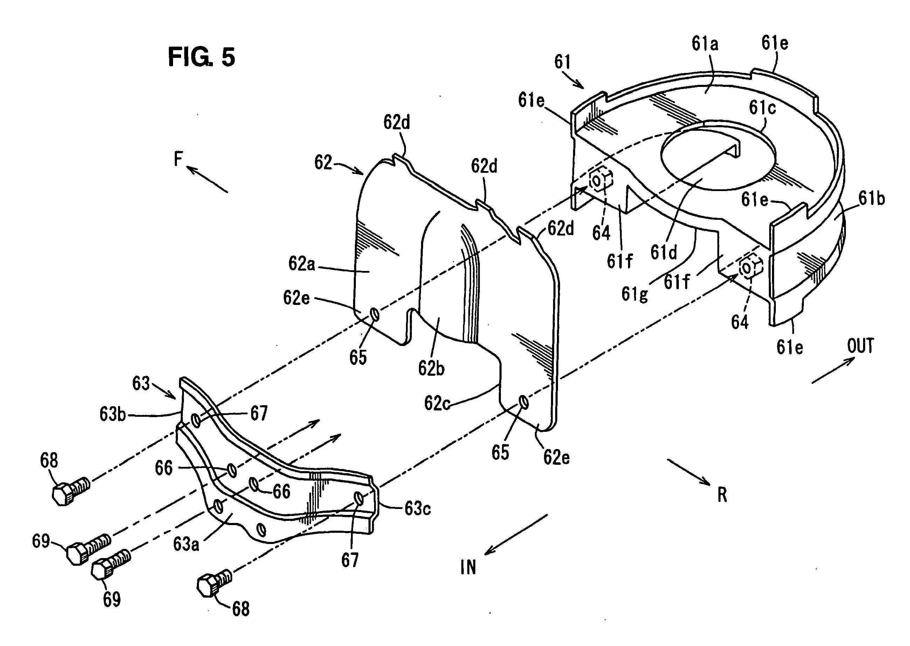

These gussets **61, 62, 63** will be described referring to FIG. **5****.** As shown in FIG. **5****,** the above-described first gusset **61** is a member which has a substantially U-shaped cross section with upper and lower horizontal plate-shaped portions **61a, 61b.** The centers of the horizontal plate-shaped portions **61a, 61b** have through holes **61c, 61d** for the damper support **49,** and plural flanges **61e** which are joined to the suspension housing reinforcement **44** are integrally with the horizontal plate-shaped portions **61a, 61**b.

The first gusset **61** has attachment faces **61f**, **61f** at its position which faces to the roof storage space **14.** Between these attachment faces **61f**, **61f** is formed a notch portion **61g,** and to back faces of these **61f, 61f** are previously welded nuts **64, 64.** This first gusset **61** is attached to the suspension housing reinforcement **44** as shown in FIG. **3****.**

The second gusset **62,** as shown in FIGS. **3** and **5****,** extends substantially upwardly from the first gusset **61** and then is joined to the rear bulkhead **13** and the rear deck member **24** via the junction lower member **45.** This second gusset **62** extending substantially vertically preferably comprises, as shown in FIG. **5****,** a gusset main plate **62a,** a protruding portion **62b** which is formed at a specified position of the gusset main plate **62a** which corresponds to the damper support **49** so as to protrude toward the roof storage space **14,** a notch portion **62c** which is formed below the protruding portion **62b,** and flanges **62d...** which bend upwardly from an upper portion of the gusset main plate **62a.** Bolt through holes **65, 65** are formed at attachment faces **62e, 62e** which are formed away from each other in the vehicle longitudinal direction via the above-described notch portion **62c.**

The third gusset **63** is arranged on the side of the roof storage space **14** relative to the second gusset **62,** and formed in a substantial V shape such that its front portion **63b** and its rear portion **63c** are positioned slightly upwardly and outwardly, in the vehicle width direction, from the its middle portion **63a,** as shown in FIG. **5****.** At the middle portion **63a** of the third gusset **63** are formed two bolt through holes **66, 66,** and at each of the front portion **63b** and the rear portion **63c** is formed a bolt through hole **67.**

As shown in FIG. **3****,** the above-described first and second gussets **61, 62** are welded to the vehicle body previously, and after attaching the damper **SD,** the third gusset **63** is fixed to the gussets **61, 62** by fastening nuts **64, 64** to bolts **68, 68,** and it is also fixed to a bracket **70** of the damper support **49** by bolts **69, 69.** Further, as shown in FIG. **3****,** the upper end of the damper **SD** coupled to the rear wheel **36** is supported at the upper portion of the rear wheel house **32,** and the above-described rollover protecting member **27** is arranged at a specified position which corresponds to a damper support portion **71** which comprises the first through third gussets **61-63** and the suspension housing reinforcement **44.**

FIG. **6** is a partial enlarged sectional view of FIG. **3****.** The rollover protecting member **27** preferably comprises a flange **27a** and a taper cone portion **27b** and is formed in a hollow shape. Plural nuts **53** are previously welded to a lower face of the junction upper member **46** and a lower face of the bending portion **13b** at the upper portion of the rear bulkhead **13.** Herein, by fastening bolts **54** to the plural nuts **53,** the rollover protecting member **27** is fixed to the rear deck portion **26.**

Herein, the vertical positional relationship between the above-described bolts **54** and nuts **53** may be reversed. That is, weld bolts may be fixed so as to extend upwardly from the junction upper member **46** and the rear bulkhead **13,** and by fastening nuts to these weld bolts, the rollover protecting member **27** may be attached to the rear deck portion **26.**

Further, as shown in FIGS. **1****,** **2** and **4****,** a bar **55** which has a closed cross section extending in the vehicle width direction is arranged so as to extend between the right and left rear quarter panel inners **37, 37,** and a latch **56** which locks a lower portion of a front end of the front roof **4** in the storage state is attached to this bar **55.** The latch **56** can be unlocked by an operation of a lever **58** at a console box **57** which is provided on the floor panel **6.**

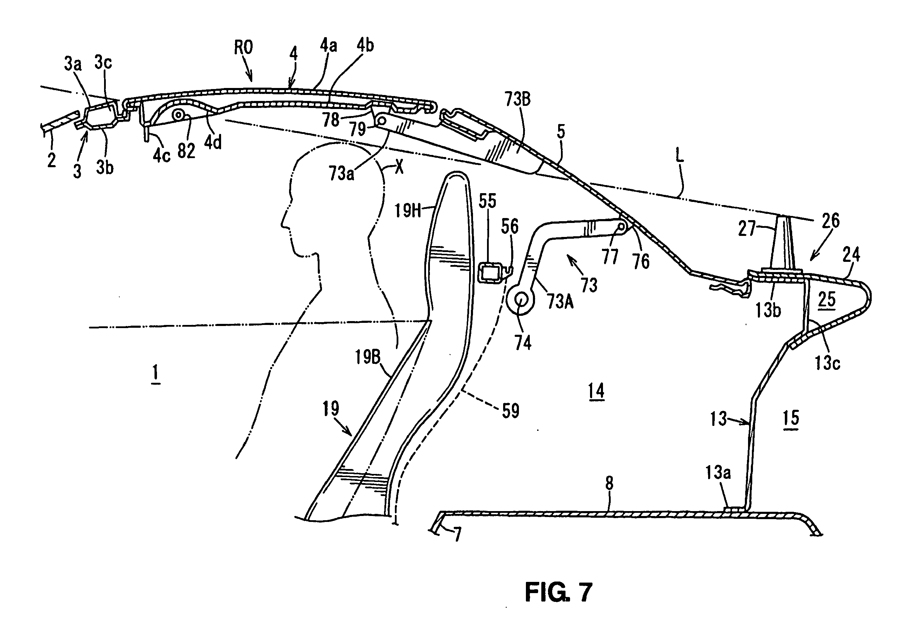

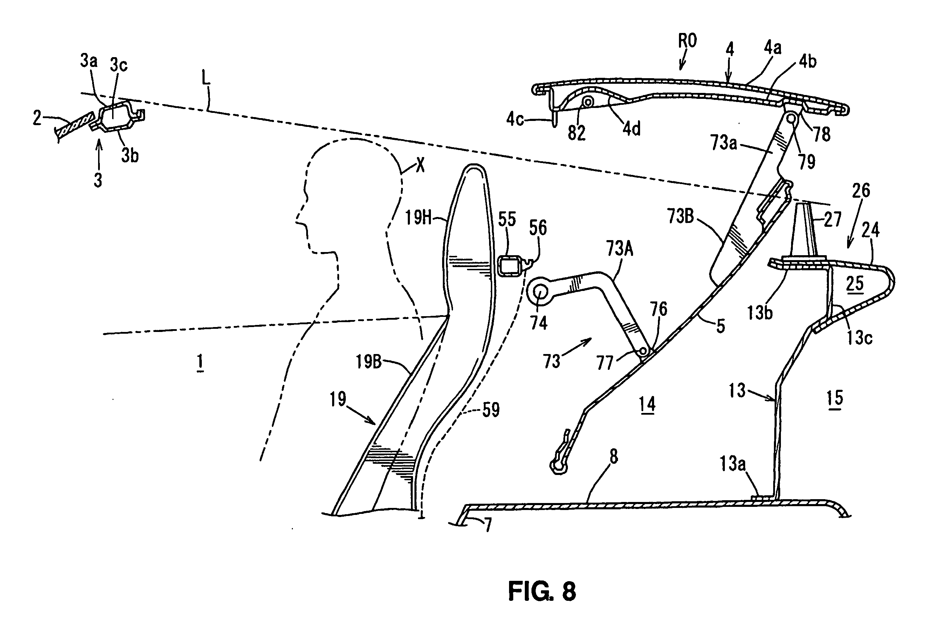

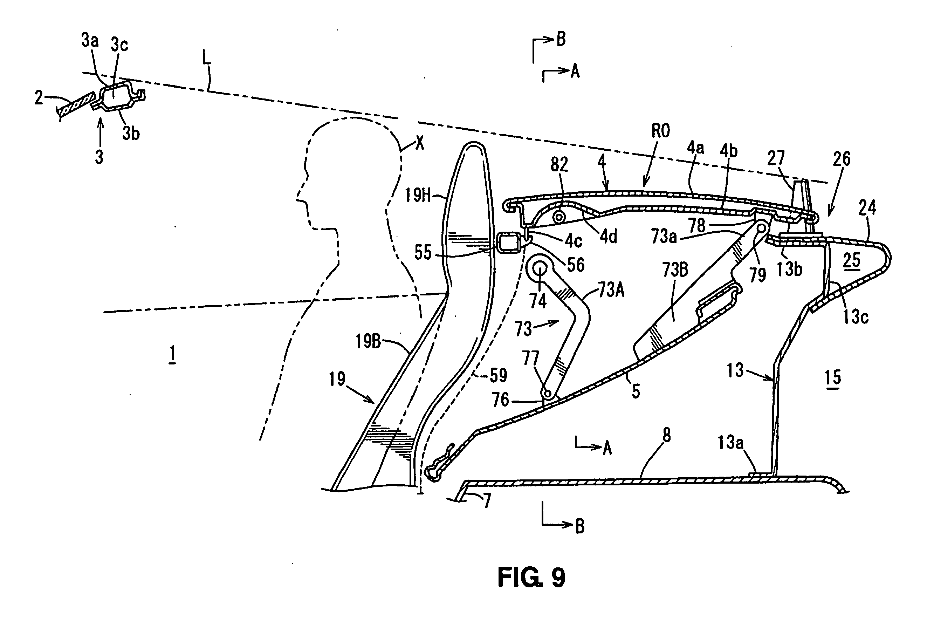

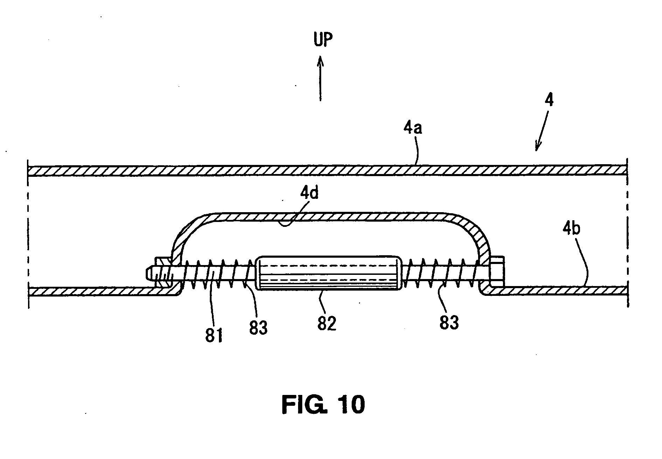

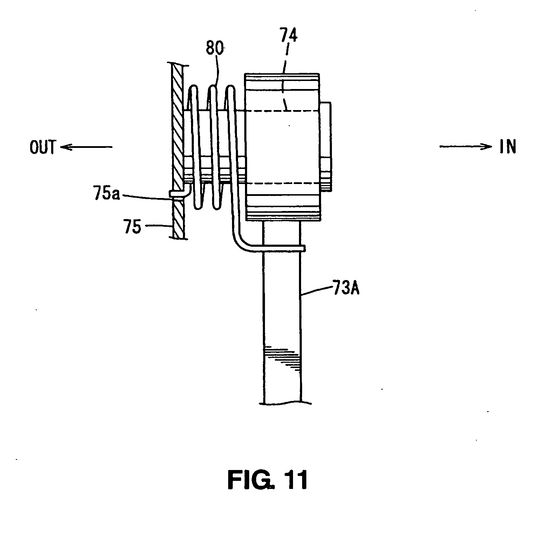

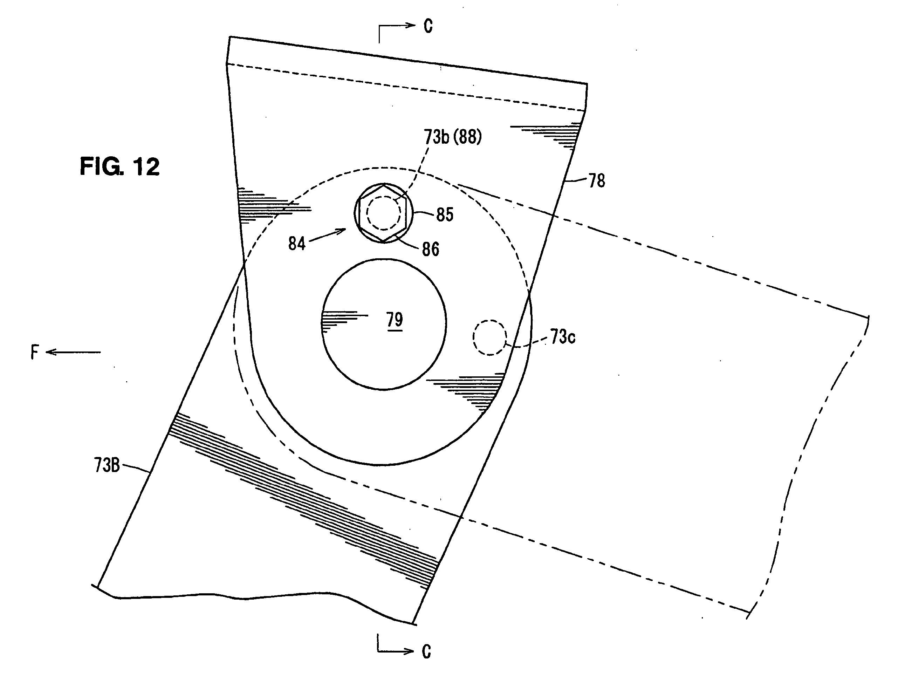

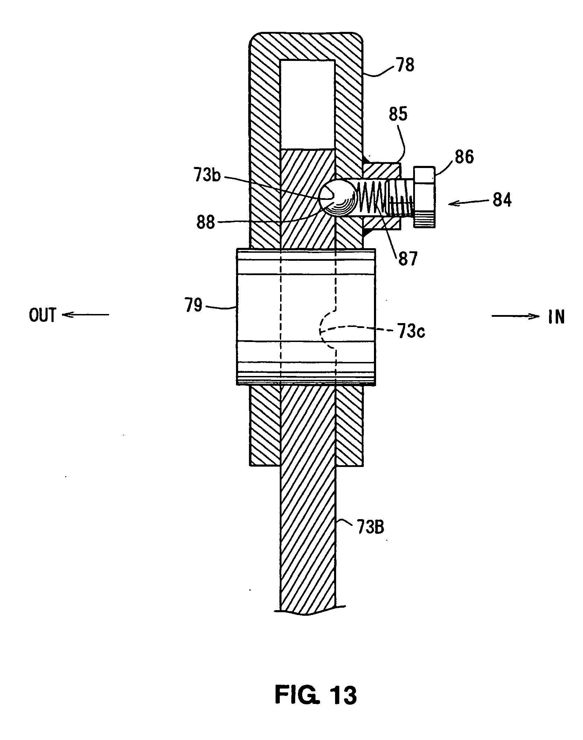

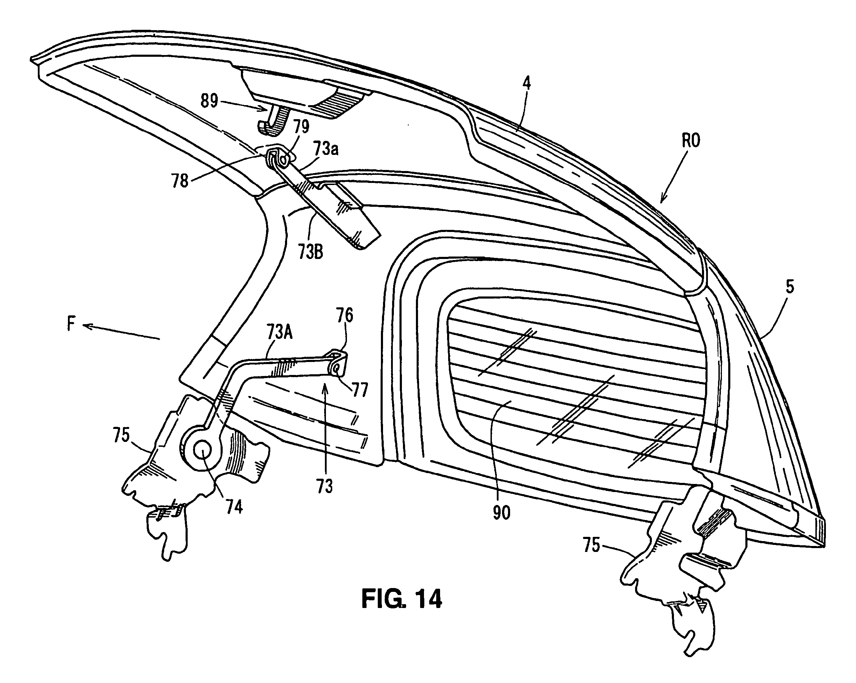

Next, the movable roof structure of a vehicle will be described referring to FIGS. **7** through **14****.** FIG. **7** is a side view in a roof-closed state (closing state). FIG. **8** is a side view in a roof-popped-up state. FIG. **9** is a side view in a roof-open state (open state). FIG. **10** is a partial sectional view taken along line A-A of FIG. **9****.** FIG. **11** is a partial sectional view taken along line B-B of FIG. **9****.** FIG. **12** is a partial enlarged side view showing a structure of a lock mechanism. FIG. **13** is a sectional view taken along line C-C of FIG. **12****.** FIG. **14** is a schematic perspective view showing the movable roof structure of a vehicle.

The above-described roof member **RO** is preferably comprised of two split sub roof members, the front roof **4** and the rear roof **5,** which are connected. In the first embodiment, both of the front and rear roofs **4, 5** are preferably made of a board-shaped hard roof member, respectively. Further, in the present embodiment, means **Z** for allowing daylight to come into the vehicle compartment **1** is provided at least at part of the sub roof members. That is, at least part of the sub roof members, i.e., the above-described front roof **4,** is made of a light-transparent material. Herein, since the front roof **4** is made of the board-shaped hard roof member, a semitransparent synthetic resin is used as the light-transparent material. That is, by making the front roof **4** of the semitransparent synthetic resin, the daylight is allowed to come into the vehicle compartment **1.** Thus, the front roof **4** is made of the board-shaped hard roof member having a light transparency.

Herein, the above-described roof member **RO** is equipped with an open roof mechanism **73** which allows a manual operation with an opening operation from a state shown in FIG. **7** to a state shown in FIG. **9****,** and a closing operation from the state shown in FIG. **9** to the state shown in FIG. **7****.** Moreover, in the first embodiment, as shown in FIG. **9****,** when the roof member **RO** is open, the rear roof **5** is stored in the roof storage space **14** and the front roof **4** is horizontally positioned above the rear roof **5** so as to cover over the roof storage space **14.**

The open roof mechanism **73** preferably comprises a pair of links **73A** and a pair of links **73B,** and as shown in FIG. **14****,** a base portion of each of the links **73A** is pivotally supported at the rear quarter panel inner **37** (see FIG. **4****)** via a support axis **74** and a bracket **75,** and a free end portion of the link **73A** is connected to a bracket **76** at the lower face of the rear roof **5** via a pin **77.**

Further, the link **73B** is fixed to a lower face of a front portion of the rear roof 5, and as shown in FIG. **7****,** the link **73B** has an extension portion **73a** which extends toward the front roof **4** from the rear roof 5. An end of the extension portion **73a** is connected to a bracket **78** attached to a lower face of a rear portion of the front roof **4** via a pin **79.**

While the open roof mechanism **73** with the links **73A, 73B** comprises a pair of mechanisms arranged at both sides of the roof member **RO** as shown in FIG. **14****,** only the right-side open roof mechanism **73** is illustrated in the figure.

As shown in FIG. **11****,** a spring **80** is preferably provided around the support axis **74** at the base portion of the link **73A.** One end of the spring **80** is inserted into an engagement hole **75a** of the bracket **75.** The other end of the spring **80** contacts the link **73A.** Thus, the spring **80** biases the rear roof **5** in the storage state shown in FIG. **9** in a direction of closing the rear roof **5.** That is, the above-described spring **80** constitutes an assist mechanism to assist the closing-operational force by the passenger for closing the roof member **RO.**

As described above, since the closing-operational force is applied to the roof member **RO** in the storage state, at a lower portion of a front portion of an inner panel **4b** of the front panel **4** is provided a striker **4c** to engage with the above-described latch 56 while the roof member **RO** is stored. Engaging the striker **4c** with the latch **56** can hold (secure) the storage state of the front roof **4** and the rear roof **5** of the roof member **RO** in the storage state shown in FIG. **9****.**

When the lever **58** at the console box **57** (see FIG. **1****)** is operated for unlocking so that engaging of the striker **4c** with the latch **56** is released via a wire **59,** the roof member **RO** in the storage state shown in FIG. **9** is biased so as to be raised upwardly (popped up) to a specified position shown in FIG. **8** by a biasing force of the spring **80.** Thereby, the manual operation of the front roof **4** by the passenger can be made easier.

As shown in FIG. **10** which is a partial sectional view taken along line A-A of FIG. **9****,** a concave portion **4d,** which is wide and large enough to allow a driver's hand in, is formed at a middle portion, in the vehicle width direction, of the inner panel **4b** of the front roof **4.** A guide shaft **81** is provided so as to extend in the vehicle width direction between both side walls of the concave portion **4d.** A grip **82** to be gripped by the driver's hand, which is a cylindrical member, is provided so as to be guided by the guide shaft **81** being inserted into a central hole of the grip **82.** Further, a pair of springs **83, 83** is disposed on both sides of the grip **82** between the both side walls of the concave portion **4d.**

With this structure, the grip 82 can be moved by the passenger along the guide shaft 81 to a position where the passenger can comfortably operate the roof member RO. In addition, after the passenger releases the grip 82, the springs 83, 83 cooperatively return the grip 82 to its original position and hold the grip at the position.

Thus, since the grip **82** is movable along the guide shaft **81** relatively to the roof member **RO** substantially in the vehicle width direction (i.e., this structure corresponds to a "moving mechanism" in claims), the passenger can easily grip and operate or handle the grip **82** regardless of the position of the passenger's body or the passenger's own arm joint characteristics.

FIG. **12** shows a lock mechanism **84** between the link **73B** and the gate-shaped bracket **78** at the lower portion of the rear portion of the front roof **4.** The link **73B** shown by solid lines in FIG. **12** matches the position of the link **73B** shown in FIG. **8****,** and the link **73B** shown by two-dotted broken lines in FIG. **12** matches the position of the link **73B** shown in FIG. **7****.** The link **73B** has two concave portions **73b, 73c** so as to correspond to a move angle between the link position of FIG. **8** and the link position of FIG. **7****.** As shown in FIGS. **12** and **13****,** the bracket **78** has a ball-shaped lock member **88** which is selectively pressed into the above-described concave portions **73b, 73c** with a basing force of a spring **87** by using a bolt **86** fastened into a screw hole of a cylindrical housing **85.**

Accordingly, in the popped-up position of the roof member **RO** shown in FIG. **8****,** the lock member **88** is pressed into the concave portion **73b** and its position is held. Further, in the closing position of the roof member **RO** shown in FIG. **7****,** the lock member **88** is pressed into the concave portion **73c** and its position is held. In FIG. **14****,** reference numeral **89** denotes a top lock for detachably attaching the roof member **RO** to the front header **3,** and reference numeral **90** denotes a back window. Herein, in these figures, an arrow **F** shows a vehicle forward direction, an arrow **R** shows a vehicle rearward direction, an arrow **IN** shows a vehicle inward direction, and an arrow **OUT** shows a vehicle outward direction, and an arrow **UP** shows a vehicle upward direction.

The present embodiment described above performs the following operations. In case the roof member **RO** in the closing state shown in FIG. **7** is changed to the open state shown in FIG. **9****,** when the front roof **4** is moved rearwardly by the passenger's manual operation after the lock of the roof member **RO** by the top lock **89** (see FIG. **14****)** is released, this rearward moving force is transmitted to the link **73A** via the link **73B** and the rear roof **5.** Consequently, the link **73A** rotates clockwise around the support axis **74,** so that the rear roof **5** is moved rearwardly from the state shown in FIG. **7** to the state shown in FIG. **9****.**

As the front roof **4** is further moved rearwardly from the midway open state shown in FIG. **8****,** this rearward moving force is transmitted to the link **73A** via the link **73B** and the rear roof 5. Consequently, the link **73A** further rotates clockwise around the support axis **74,** so that the rear roof **5** is moved to a reverse state shown in FIG. **9** from the standing state in FIG. **8****,** and the front roof **4** is moved rearwardly and positioned above the rear roof **5** in the reverse state so as to cover horizontally over the roof storage space **14.** In this case, the striker **4c** of the front roof **4** engages with the latch **56** on the side of the vehicle body.

Reversely, in case the roof member **RO** in the storage state shown in FIG. **9** is changed to the closing state shown in FIG. 7, when the lever **58** (see FIG. **1****)** at the console box **67** is unlocked, the engagement of the striker **4c** with the latch **56** is released via the wire **59.** Consequently, the roof member **RO** rises up to the popped-up position shown in FIG. **8****,** receiving the biasing force of the spring **80** (see FIG. **11**), and this position is held by the lock mechanism **84** (see FIGS. **12** and **13****).**

Herein, the popped-up position shown in FIG. **8** becomes a preferable height position for the passenger's operation, compared with the position of the front roof 4 shown in FIG. **9****.** Thus, when the roof member **RO** is manually operated so as to be moved in the closing direction, by griping the grip **82** of the front roof **4** shown in FIG. **8****,** the roof member **RO** is positioned to the closing state shown in FIG. **7****.**

Meanwhile, in case the vehicle with the roof member **RO** in the open state shown in FIG. **9** rolls over, the vehicle is supported by the front header **3** and the roll protecting member **27.** Since the height of the line L which connects the upper end of the roll protecting member **27** and the upper end of the front header **3** is set to be higher than the upper end of the seatback **19B** with the headrest **19H,** the passenger **X** can be protected securely by the rollover protecting member **27** in the vehicle rollover.

The movable roof structure of a vehicle according to the first embodiment shown in FIGS. **1** through **14****,** comprises the roof member **RO** provided so as to be positioned in the closing state to cover over the upper part of the vehicle compartment **1** and the open state to open the upper part of the vehicle compartment **1,** the roof member **RO** comprising the plural split sub roof members (see the front roof **4,** the rear roof **5)** which are connected, at least one of which is made of the board-shaped hard roof member, the roof member **RO** being stored in the storage portion (space **14)** at the rear part of the vehicle compartment **1** in the state in which the sub roof members (the front roof **4,** the rear roof **5)** are folded when being in the open state, the operational member (see the grip **82)** to be operated (gripped) by the passenger, the operational member (the grip **82)** being provided at the specified position of the front-side member (see the front roof **4)** of the sub roof members so as to transmit the opening-operational force or the closing-operation force by the passenger to the sub roof members for opening or closing the roof member **RO,** and the moving mechanism (see the guide shaft **81)** provided to position the operational member (the grip **82)** such that the operational member (the grip **82)** is movable relatively to the roof member **RO.**

Herein, the means **Z** for allowing daylight to come into the vehicle compartment 1 is provided at least at part (the front roof **4** in the present embodiment) of the sub roof members (the front roof **4,** the rear roof **5)** (see FIG. **7****).** This means **Z** can be made from semitransparent synthetic resin in the first embodiment in which the sub roof member (the front roof **4)** is made of the hard roof member.

According to the above-described structure, since the roof member **RO** which comprises the plural split sub roof members (the front roof **4,** the rear roof **5)** which are connected is provided and its opening or closing is manually operated (handled) by the passenger, the mechanism for opening or closing the roof member **RO** can be properly simple and light and also its operation and handling can be improved and its operational force can be decreased. Further, since the operational member (the grip **82)** is provided so as to be operated by the passenger and movable relatively to the roof member **RO,** the operation and handling of the roof member **RO** by the passenger can be further improved. That is, since the grip **82** is movable along the guide shaft **81** relatively to the roof member **RO** substantially in the vehicle width direction, the passenger can easily grip and operate or handle the grip **82** regardless of the position of the passenger's body or the passenger's own arm joint characteristics.

Further, the roof member **RO** comprises the two sub roof members (the front roof **4,** the rear roof **5)** which are connected to each other (see FIG. **7****).** Thereby, since the roof member **RO** is comprised of two split members, the structures of the roof member **RO** and the open roof mechanism **73** can be simpler and lighter and the storage space of the roof member **RO** can be simplified accordingly.

Moreover, the roof member **RO** comprises at least the front roof member (front roof **4)** and the rear roof member (rear roof **5),** and both of the front and rear roof members (front and rear roofs **4, 5)** are made of the hard roof member (see FIG. 7). Thereby, since both of the front and rear roof members (front and rear roofs **4, 5)** are made of the hard roof member, the antitheft protection (burglarproof) is provided, thereby the safety of the vehicle can be improved and also the nice-looking car design can be secured.

Further, since the means **Z** for allowing daylight to come into the vehicle compartment **1** is provided at least at part of the sub roof members (the front roof **4** in the present embodiment), better lighting can provide the comfortable circumstances in the vehicle compartment 1.

At least part of the sub roof members (front roof **4)** is made of the light-transparent material (semitransparent synthetic resin) (see FIG. **7****).** Thereby, the better lighting can be achieved with a simple structure without forming any window at the sub roof members (front roof **4)** or conducting any design changing.

In addition, the roof member **RO** comprises at least the front roof **4** and the rear roof 5, and the front roof **4** is made of the light-transparent hard roof member (see FIG. 7). Thereby, since the front roof **4,** which contributes the safety the most, is made of the hard roof member, the vehicle is properly superior in antitheft. Further, since the front roof **4** has the light transparency, the better lighting is available, so that the comfortable circumstances in the vehicle compartment **1** can be provided.

The above-described movable roof structure of a vehicle further comprises the assist mechanism (see the spring **80)** to assist an operational force by the passenger. Thereby, since the operational force of the manual operation by the passenger is assisted (helped) by the assist mechanism (spring **80),** decreasing the operational force which may be necessary for the manual operation of the roof member **RO** can be achieved, so that the handling can be further improved. Herein, the above-described assist mechanism (spring **80)** assists (helps) the closing-operational force by the passenger for closing the roof member. Thereby, the operational force of closing the roof member **RO** can be decreased, so that the closing handling can be further improved. Moreover, since the roof member **RO** in the storage state shown in FIG. **9** is biased so as to be raised upwardly (popped up) to the specified position shown in FIG. **8** by the biasing force of the spring **80,** the manual operation of the front roof **4** by the passenger can be made easier.

### EMBODIMENT 2

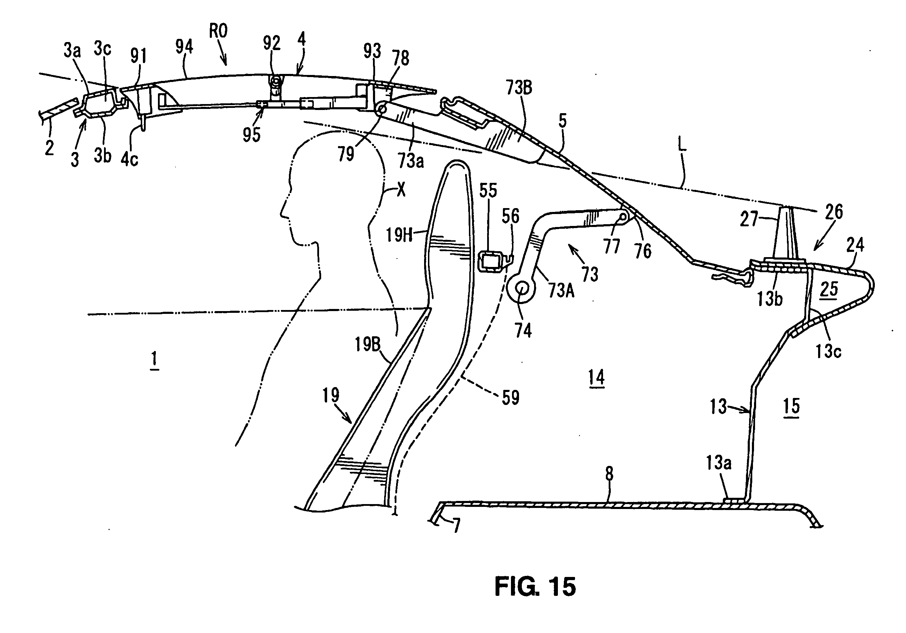

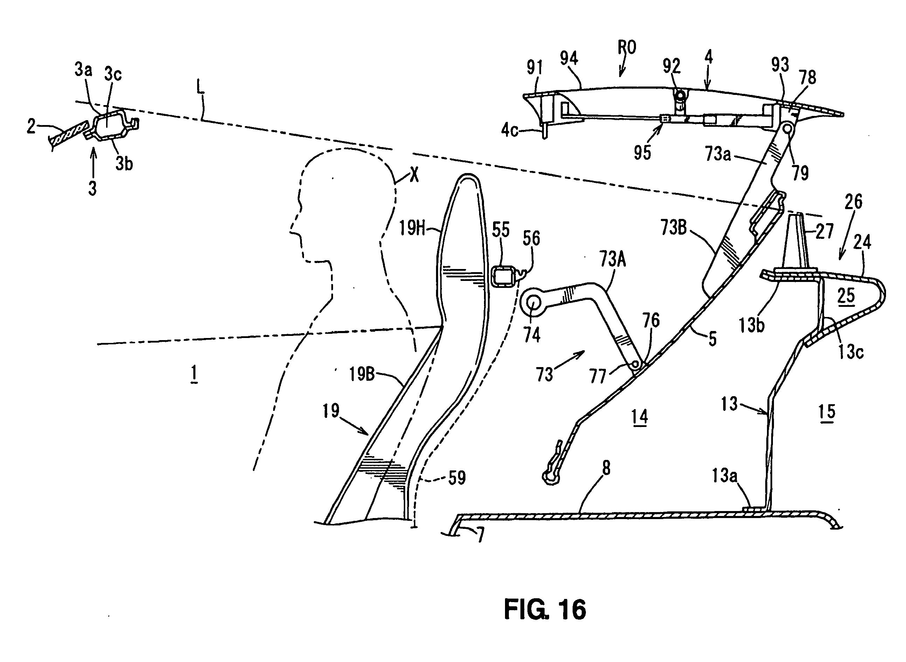

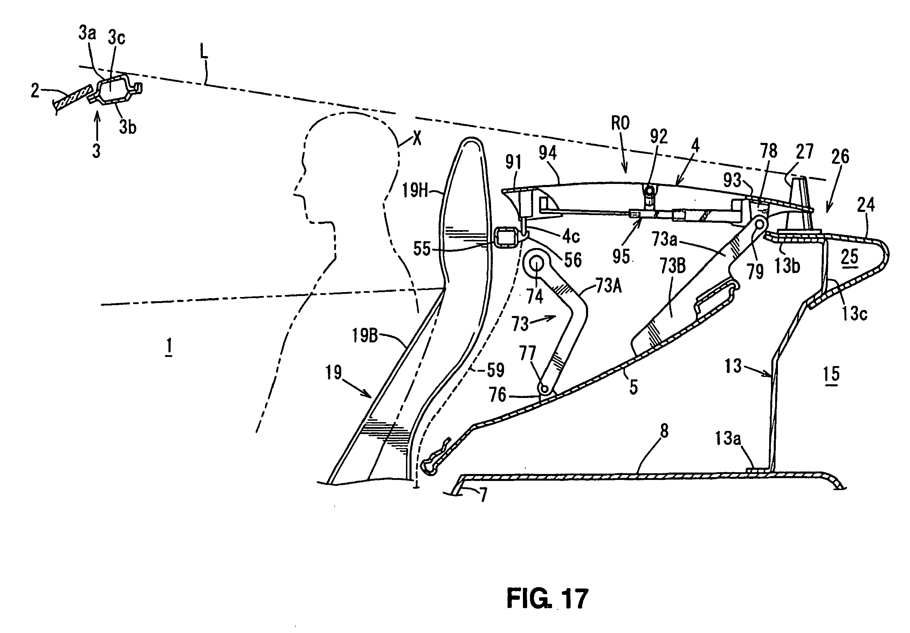

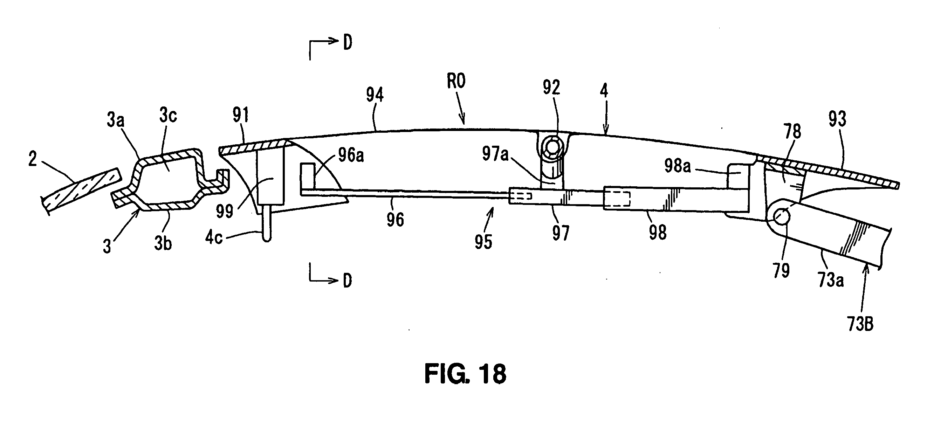

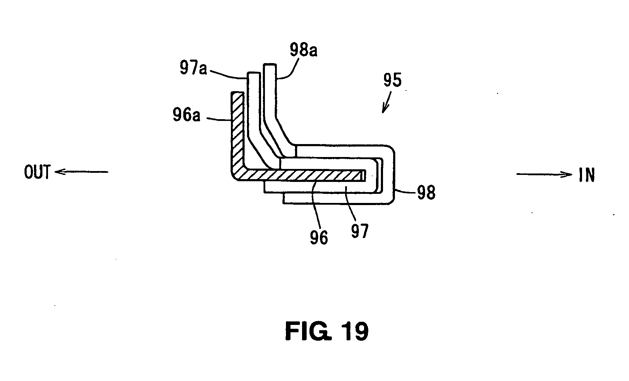

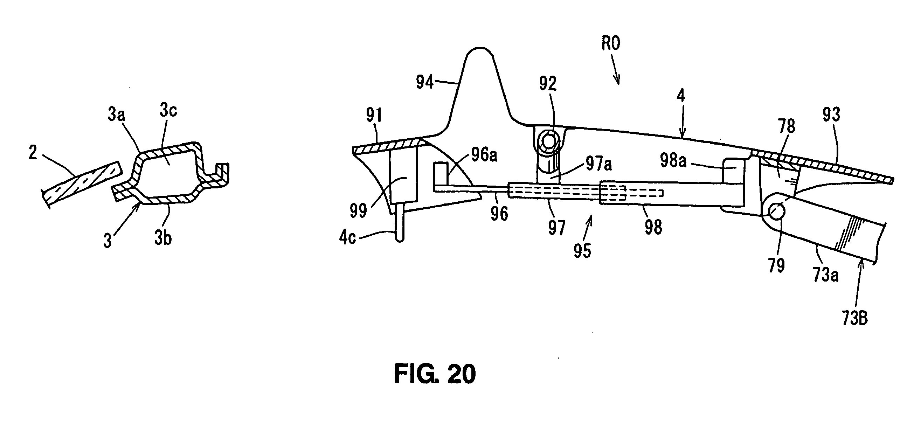

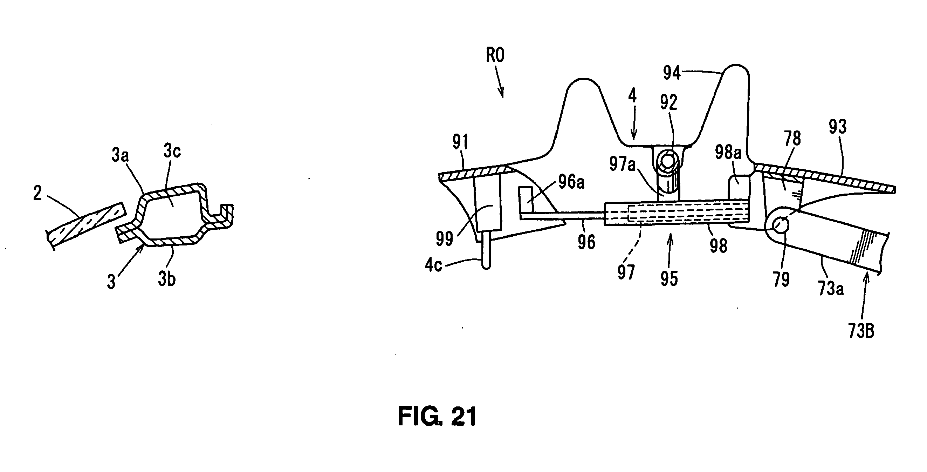

FIGS. **15** through **21** show a movable roof structure of a vehicle according to a second embodiment not covered by the claims. FIG. **15** is a side view in a closing state of the roof member. FIG. **16** is a side view in a roof-popped-up state of the roof member. FIG. **17** is a side view in a roof-open state of the roof member. FIG. **18** is a partial enlarged sectional view of FIG. **15****.** FIG. **19** is a partial sectional view taken along line D-D of FIG. **18****.** FIG. **20** is a side view showing a partially-open state of a front roof. FIG. **21** is a side view showing a state in which the front roof is opened more. The same components as those of the first embodiment are denoted by the same reference characters.

While the both of the front and rear roofs **4, 5** are made of the board-shaped hard roof member in the above-described first embodiment, in the second embodiment shown in FIGS. **15** through **21****,** the rear roof **5** is made of the board-shaped hard roof member, whereas the front roof **4** is made of a flexible roof member, i.e., a so-called soft roof.

Additionally, the means **Z** for allowing daylight to come into the vehicle compartment **1** is provided at the front roof **4** as part of the sub roof members in the second embodiment as well. However, since the front roof **4** is made of the flexible roof member in this embodiment, a top **94,** which will be described below, of this flexible roof member is made of a light-transparent material. A white canvas is used as this light-transparent material.

Thus, the front roof **4** preferably comprises, as shown in FIG. **18****,** a front forming member **91** which is made of an arch-shaped plate, a middle forming member **92** which is made of an arch-shaped pipe, a rear forming member **93** which is made of an arch-shaped plate, and the top **94** which is made of clothes (white canvas) and stretched over the forming members **91, 92, 93.**

A pair of rail mechanisms **95** which can expand and contract in the vehicle longitudinal direction is provided at both sides of a lower portion of the front roof **4** for opening or closing the top **94.** This rail mechanism **95** preferably comprises, as shown in FIGS. **18** and **19****,** a front rail **96,** a middle rail **97,** and a rear rail **98.** The rear rail **98** holds the middle rail **97** so that the middle rail 97 can slide longitudinally, and the middle rail **97** holds the front rail **96** so that the front rail **96** can slide longitudinally.

An attachment piece **96a** is integrally formed at a front portion of the front rail **96,** and this attachment piece **96a** is fixed to a curve lower portion of the front forming member **91.** An attachment piece **97a** is integrally formed at a middle portion of the middle rail **97,** and this attachment piece **97a** is fixed to a curve lower portion of the middle forming member **92.** An attachment piece **98a** is integrally formed at a rear portion of the rear rail **98,** and this attachment piece **98a** is fixed to a curve lower portion of the rear forming member **93.**

While the pair of rail mechanisms **95** is provided at the both sides of the lower portion of the front roof **4,** only the right-side one is illustrated. Herein, the above-described rear rail **93** is a fixed one, and the other two rails **96, 97** are movable ones. Accordingly, the flexible-member made front roof **4** can be partially opened by the passenger's manual operation to any state position which is shown in FIG. **20** or FIG. **21**. □ @ That is, the present embodiment can provide a partially-open mode in which the roof member **RO** is partially open and held.

Meanwhile, the striker **4c** is attached to a lower position of the front forming member **91** via a bracket **99** as shown in FIGS. **18****,** **20** and **21****.** The grip **82** and others shown in FIG. **10****,** the spring **80** (the assist mechanism) shown in FIG. **11****,** and the lock mechanism **84** shown in FIG. **13** are applied in the second embodiment as well as the first embodiment, specific illustrations and descriptions of which are simply omitted here.

According to the movable roof structure of a vehicle of the second embodiment shown in FIGS. **15** through **21****,** the roof member **RO** comprises at least the front roof **4** and the rear roof **5** which are connected, and the rear roof **5** is made of the hard roof member (see FIG. **15****).** In other words, the rear roof **5** is made of the hard roof member, whereas the front roof **4** is made of the flexible and light-transparent material so as to be the so-called soft top.

Thereby, since the rear roof **5** is made of the hard roof member, the appearance can be improved in case a rear window (back window **90)** is attached to the rear roof **5** and its structure can be better as well. Moreover, the light weight can be achieved, compared with a case in which the whole of roof member **RO** is made of the hard roof member entirely. Further, since the front roof **4** is made of the light-transparent material (white canvas), the better lighting is available in accordance with the passenger's request, thereby further improve the comfortable circumstances in the vehicle compartment **1.**

Further, since the partially-open mode in which the roof member **RO** is partially open and held as described above is provided, the open positions of the roof member **RO** are selectable, so that the passenger can be provided with comfortable feelings. Herein, the roof member **RO** can take the full-closing position, the partially-open position, and the full-open position. Also, since the open roof mechanism stops moving of the roof member **RO** in the middle of opening or closing operation of the roof member **RO,** the passenger's having the comfortable feelings can be further improved. Herein, since this stopping of moving the roof member **RO** is conducted at any position, adjusting the amount of outside-air induction or lighting is available in accordance with the passenger's request. Moreover, since the front roof **4** is movable in the vehicle longitudinal direction, the partially-open mode can be secured when the front roof **4** is moved, so that both of the outside-air induction or the ventilation of the vehicle compartment **1** and lighting adjustment can be achieved.

The other structures, operations and effects of the second embodiment shown in FIGS. **15** through **21** are substantially the same as those of the first embodiment. Therefore, the same components are denoted by the same reference characters in FIGS. **15** through **21****,** specific descriptions of which are omitted here. In place of the second embodiment, the front roof **4** may be made of the hard roof member, and the rear roof **5** may be made of the flexible member. Further, in case the means **Z** for allowing daylight to come into the vehicle compartment **1** is provided at the hard roof member, it may be configured to adjust the amount of daylight allowed to come in by using a liquid light-adjusting glass.

Further, alternative examples which can provide the above-described partially-open mode like the second embodiment will be described as third and fourth embodiments.

### EMBODIMENT 3

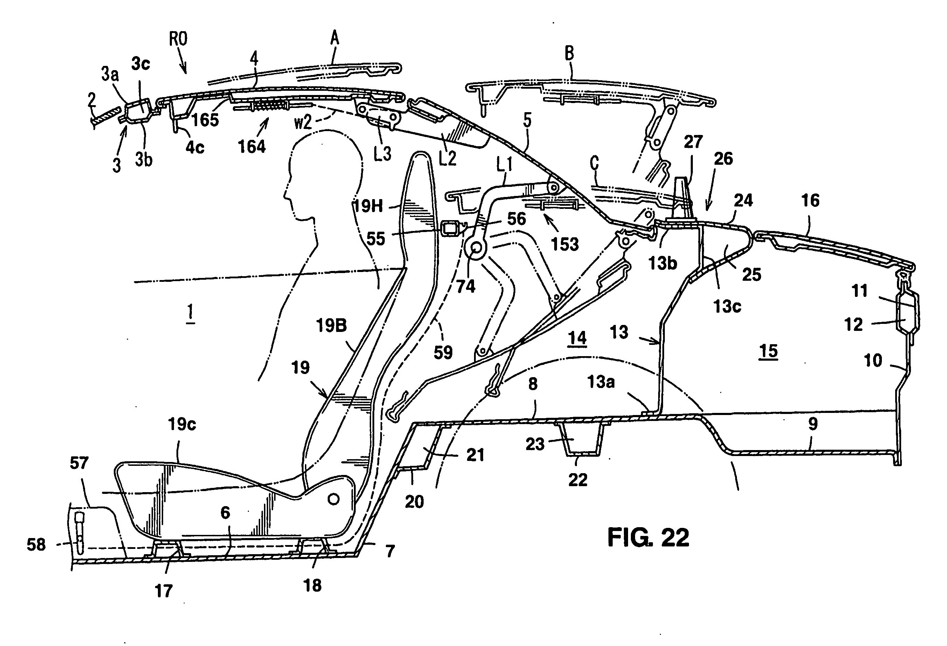

A third embodiment not covered by the claims will be described referring to FIGS. **22** through **27****.** The same components as those of the above-described first embodiment are denoted by the same reference characters, specific descriptions of which are omitted here. Further the grip **82** and others shown in FIG. **10****,** the spring **80** (the assist mechanism) shown in FIG. **11****,** and the lock mechanism **84** shown in FIG. **13** are applied in the third embodiment as well as the first embodiment, specific illustrations and descriptions of which are simply omitted here.

In FIG. **22****,** the closing state of the front and rear roofs **4, 5** is illustrated by solid lines, a partially-open mode of the roof member **RO** is illustrated by two-dotted broken lines **A,** a midway opening state (popped-up state) of the front and rear roofs **4, 5** is illustrated by two-dotted broken lines **B,** and a storage state of those in the roof storage space **14** is illustrated by two-dotted broken lines **C.**

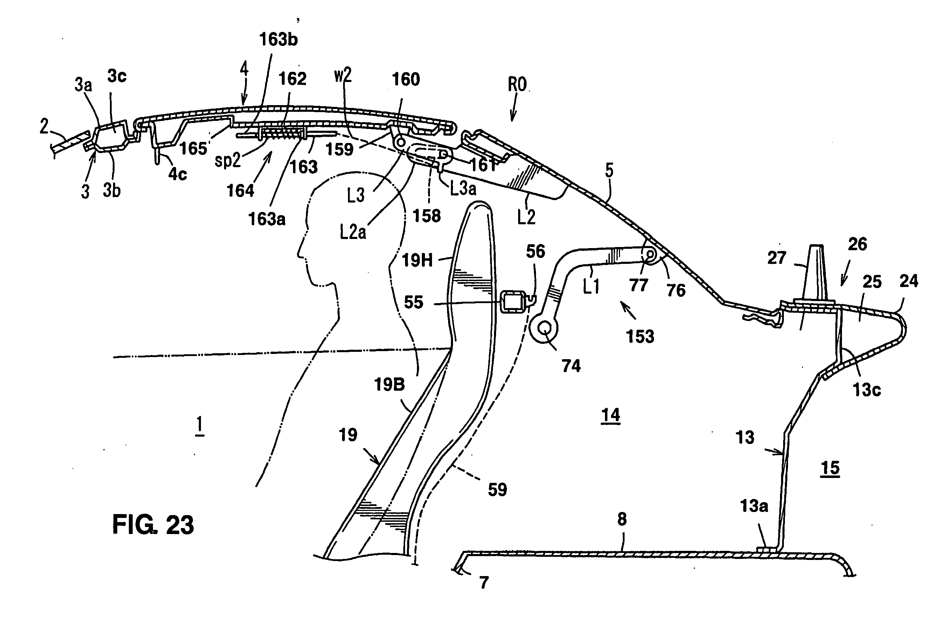

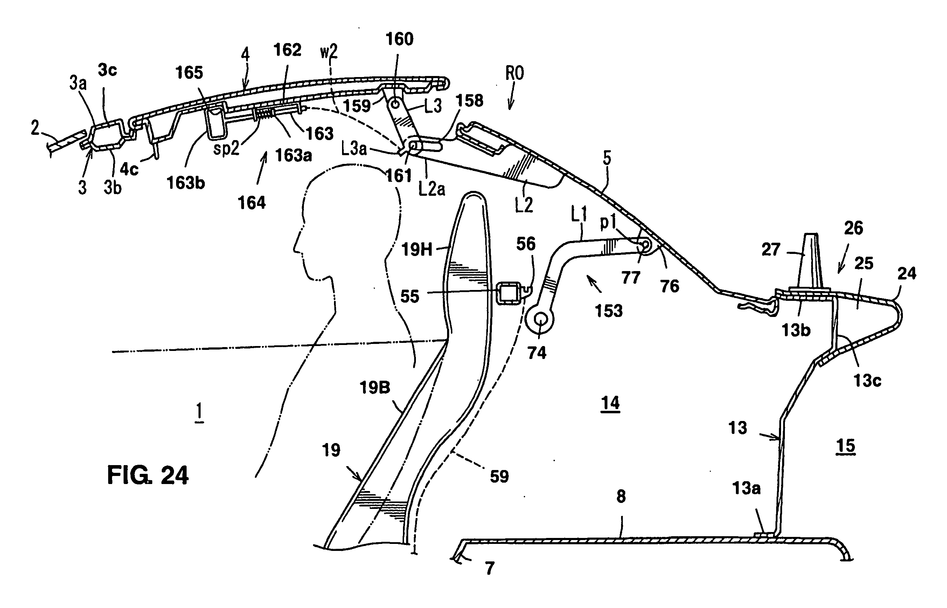

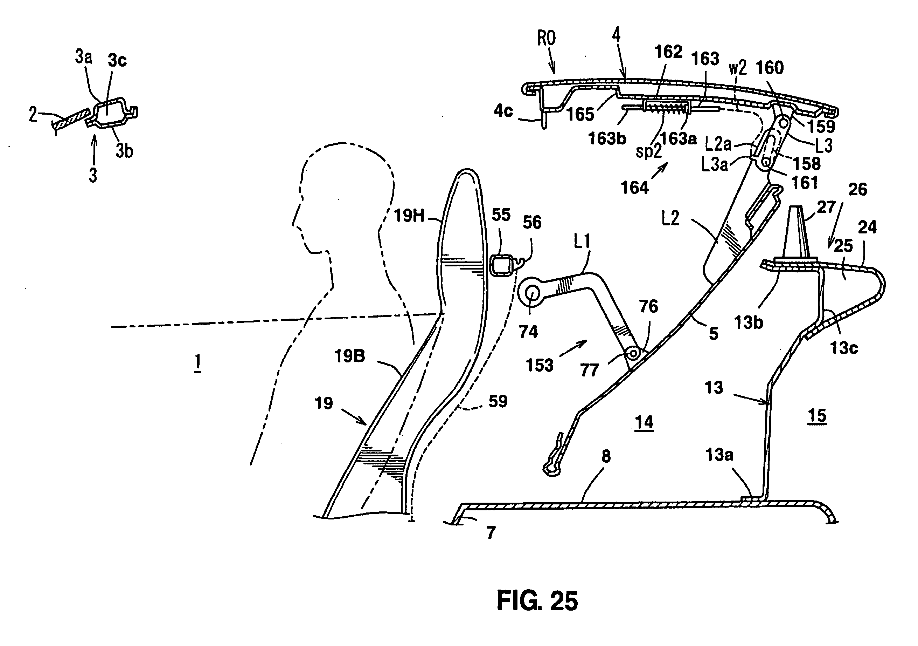

In the third embodiment, both of the front and rear roofs **4, 5** are made of the board-shaped hard roof member, and there is provided an open roof mechanism **153** which allows a manual operation with an opening operation from a state shown in FIG. **23** to a state shown in FIG. **25****,** and a closing operation from the state shown in FIG. **25** to the state shown in FIG. **23****.** This open roof mechanism **153** has another type of partially-open mode in which part of the roof member **RO** is opened and held as shown in FIG. **24****.**

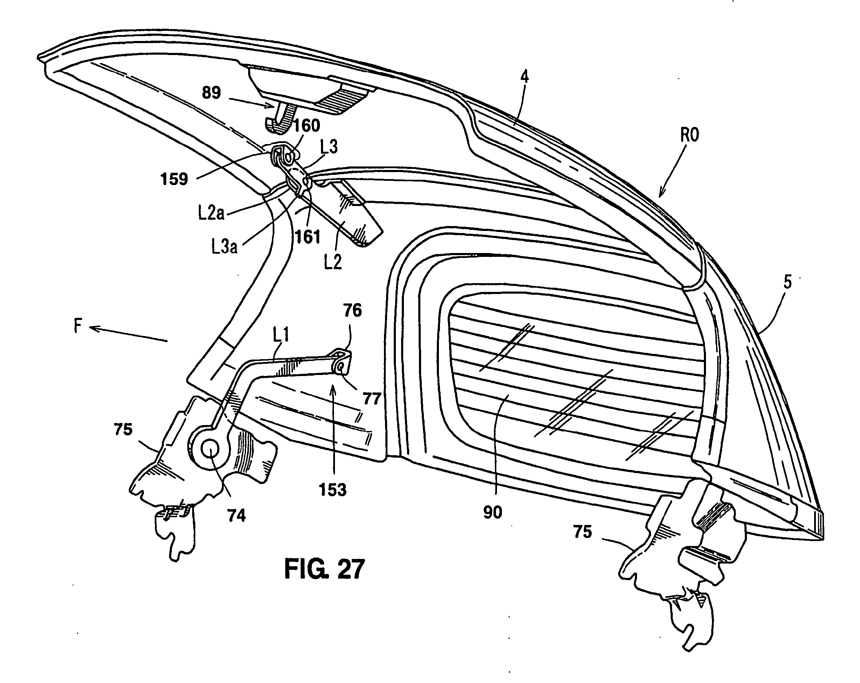

Thus, the open roof mechanism **153** preferably comprises a link **L1,** another link **L2,** and a sub link **L3.** As shown in FIG. **27****,** a base portion of the link **L1** is pivotally supported at the rear quarter panel **37** on the vehicle-body side via the support axis **74** and the bracket **75,** and a free end portion of the link **L1** is connected to the bracket **76** at the lower face of the rear roof **5** via the pin **77.** Further, the link **L2** is fixed to a lower face of a front portion of the rear roof **5,** and as shown in FIG. **23****,** the link **L2** has an extension portion **L2a** which extends toward the front roof **4** from the rear roof **5.** A slot **158** is formed at the extension portion **L2a** so as to extend substantially in the vehicle longitudinal direction. Moreover, the sub link **L3** is connected to a bracket **159** fixed to a lower face of a rear portion of the front roof **4** via a pin **160,** and this sub link **L3** has a pin **161** to be inserted in the above-described slot **158** at its rear end. Additionally, a projecting piece **L3a** is integrally formed with a specified portion of the sub link **L3** near the pin **161,** and a rear end of a rod **163** which is formed at a lower face of a middle portion of the front roof **4** via a bracket **162** and the above-described projecting piece **L3a** are interconnected via a wire **w2.** Thus, a tilt-up mechanism **164** as an open mechanism is provided.

Herein, a spring retainer **163a** is integrally formed with the rod **163** at a specified position located in a gate-shaped bracket **162.** A spring **sp2** is arranged between a front piece of the bracket **162** and the spring retainer **163a.** Further, at a front portion of the rod **163** is formed a loop-shaped grip **163b** as shown in FIG. **24****,** and a concave engagement portion **165** for an engagement with the above-described grip **163b** is formed at a specified portion of the roof inner panel of the front roof **4.**

Herein, when the rod **163** is pulled forwardly against a biasing force of the spring **sp2** from the fully closed state of the roof member **RO** shown in FIG. **23** and then this rod **163** is rotated by 90º so as to have the grip **163b** engage with the concave engagement portion **165,** the pin **161** of the sub link **L3** moves forwardly along the slot **158** of the link **L2,** so that the sub link **L3** takes its standing state as shown in FIG. **24****.** Thus, the rear portion of the front roof **4** rises (tilts) up so that the front roof **4** partially opens. That is, the above-described tilt-up mechanism **164** is a mechanism (opening mechanism) to vertically move the front roof **4** as part of the roof member **RO.** Herein, a return spring (not illustrated) to return the sub link **L3** to its normal position shown in FIG. **23** is provided between the above-described bracket **159** and the sub link **L3.**

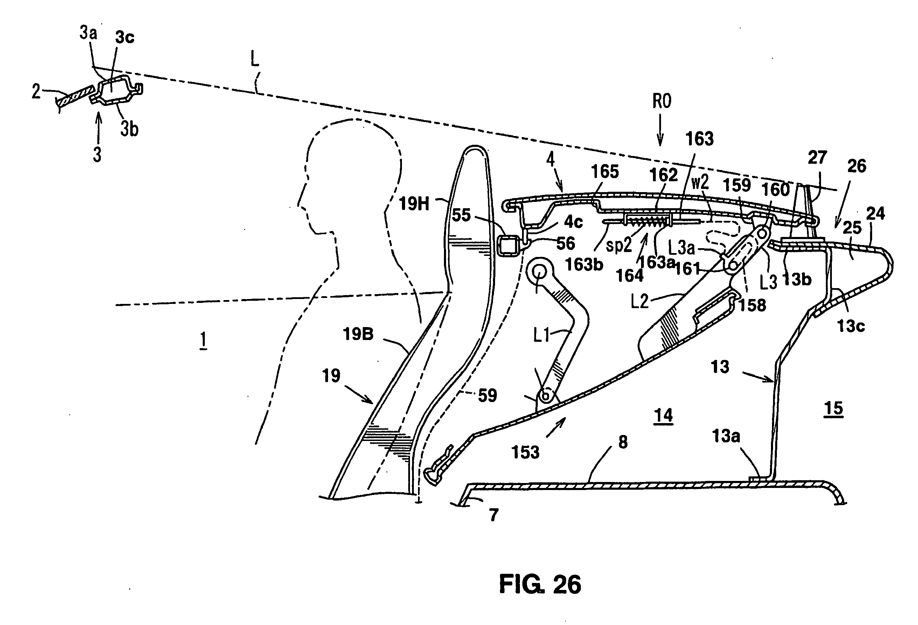

Hereinafter, the operation of the present embodiment described above will be described. In case the roof member **RO** in the closing state shown in FIG. **23** is changed to its open state shown in FIG. **26****,** when the front roof **4** is moved rearwardly through the driver's manual operation after releasing the lock of the roof member **RO** by the top lock **89** (see FIG. **27****),** this rearward moving force is transmitted to the link **L1** via the links **L3, L2** and the rear roof **5.** The link **L1** rotates clockwise around the support axis **74,** so that the rear roof **5** is moved rearwardly from the state shown in FIG. **23** to the state shown in FIG. **25****.**

As the front roof **4** is further moved rearwardly from the midway open state shown in FIG. **24****,** this rearward moving force is transmitted to the link **L1** via the links **L3, L2** and the rear roof **5.** Consequently, the link **L1** further rotates clockwise around the support axis **74,** so that the rear roof **5** is moved to a reverse state shown in FIG. **25** from the standing state in FIG. **24****,** and the front roof **4** is moved rearwardly and positioned above the rear roof **5** in the reverse state so as to cover horizontally over the roof storage space **14.** In this case, the striker **4c** of the front roof **4** engages with the latch **56** on the side of the vehicle body.

Reversely, in case the roof member **RO** in the storage state shown in FIG. **25** is changed to the closing state shown in FIG. **23****,** when the lever **58** (see FIG. **22****)** at the console box **67** is unlocked, the engagement of the striker **4c** with the latch **56** is released via the wire **59.** Consequently, the roof member **RO** rises up to the popped-up position shown in FIG. **24****,** receiving the biasing force of the spring **80,** and this position is held by the lock mechanism **84.**

Herein, the popped-up position shown in FIG. **25** becomes a preferable height position for the passenger's operation, compared with the position of the front roof **4** shown in FIG. **26****.** Thus, when the roof member **RO** is manually operated so as to be moved in the closing direction, the roof member **RO** is positioned to the closing state shown in FIG. **23****.**

Meanwhile, when after the rod **163** is pulled forwardly against the biasing force of the spring **sp2** in the full closing state of the roof member **RO** shown in FIG. **23****,** it is operated to turn by 90º so that the grip **163b** can engage with the engagement portion **165,** the pin **161** of the sub link **L3** moves forwardly along the slot **158** of the link **L2** as shown in FIG. **24****,** so that the sub link **L3** takes its standing state. Consequently, the front roof **4** tilts up around its front end top lock **89** (see FIG. **27****)** so that its rear portion tilts up and the front roof **4** opens partially. That is, the open roof mechanism **153** including the tilt-up mechanism **164** is configured so that moving of the roof member **RO** is stopped in the middle of opening the roof member **RO.** Thus, the present embodiment can provide another type of partially-open mode (see FIG. **24****)** in which the rear portion of the front roof **4** tilts up and open partially.

According to the present embodiment shown in FIGS. **22** through **27****,** the movable roof structure of a vehicle comprises the open roof mechanism **153** to provide the partially-open mode (see FIG. **24****)** in which the roof member **RO** is partially open and held (see FIGS. **23** and **24****).** Thereby, the open positions of the roof member **RO** are selectable, so that the passenger can be provided with comfortable feelings. Herein, the roof member **RO** can take the full-closing position (see FIG. **23****),** partially-open position (see FIG. **24****),** and full-open position (see FIG. **26****).**

Further, the open roof mechanism **153** stops moving of the roof member **RO** in the middle of opening or closing operation of the roof member **RO** (see FIG. 24). Thereby, the passenger's having the comfortable feelings can be further improved. Moreover, the movable roof structure of a vehicle comprises the opening mechanism (the tilt-up mechanism **164)** to vertically move at least part of the roof member **RO** (the front roof **4** in the present embodiment) (see FIG. **24****).** Thereby, ventilation of the vehicle compartment can be improved.

### EMBODIMENT 4

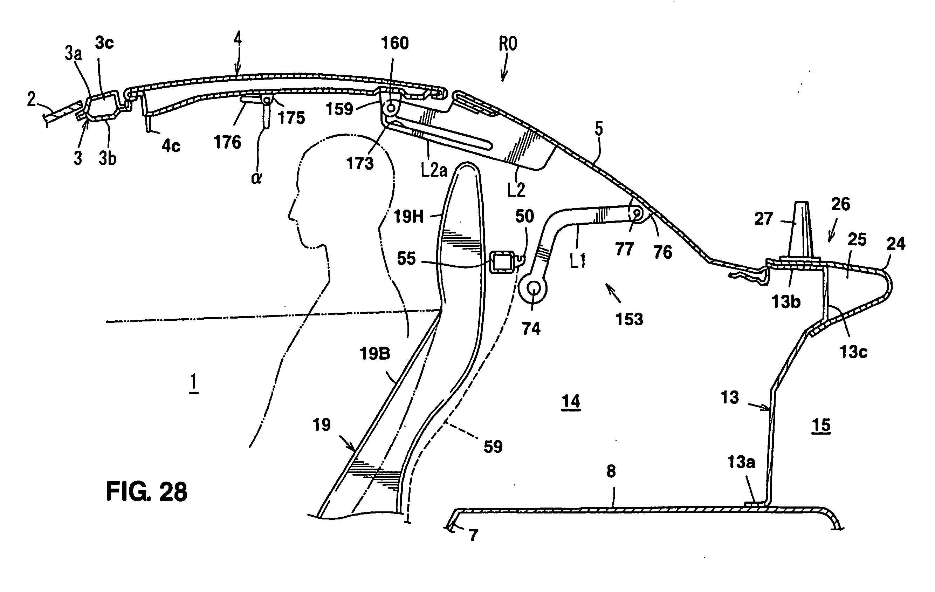

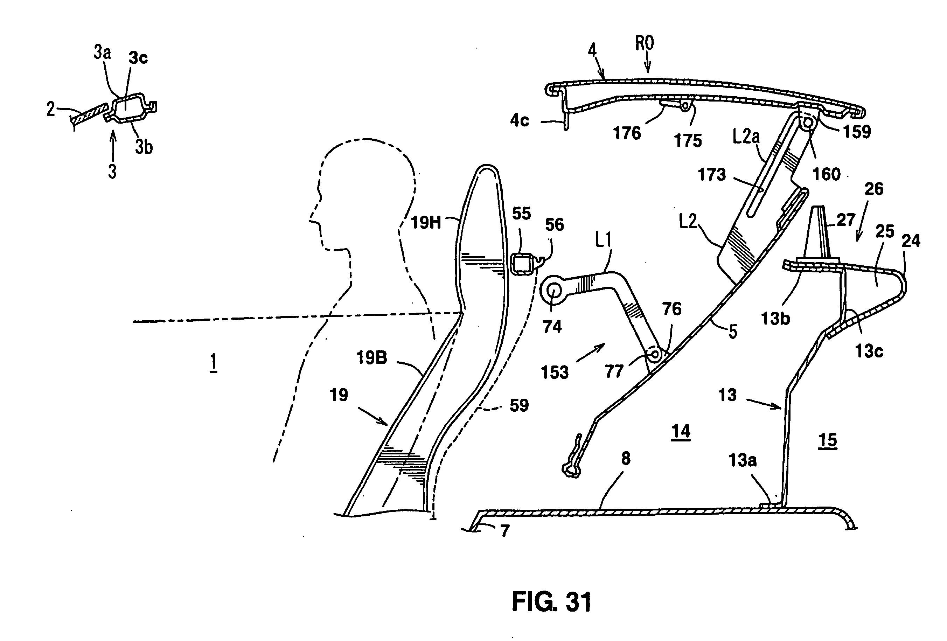

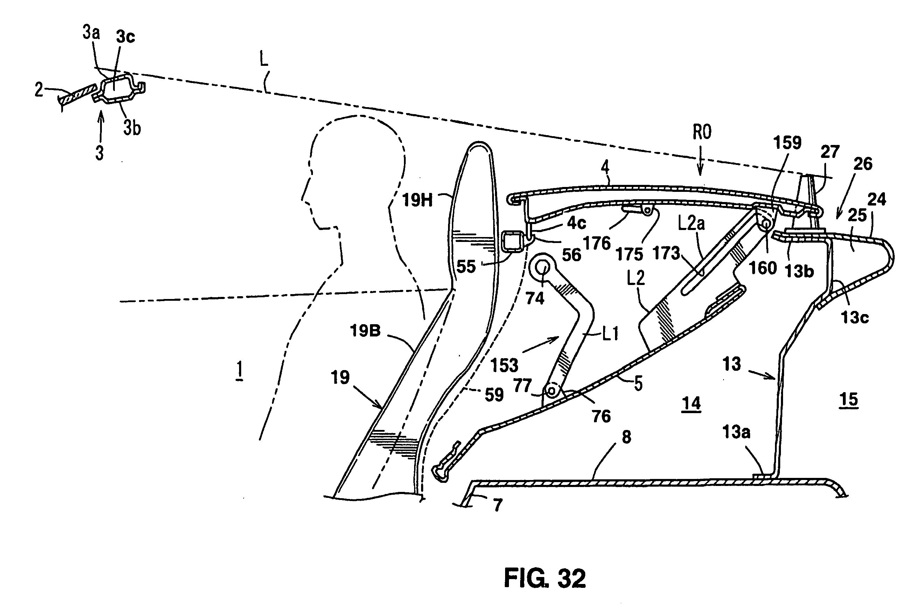

A fourth embodiment of the present invention will be described referring to FIGS. **28** through **32****.** The same components as those of the above-described first embodiment are denoted by the same reference characters, specific descriptions of which are omitted here. Further the grip **82** and others shown in FIG. **10****,** the spring **80** (the assist mechanism) shown in FIG. **11****,** and the lock mechanism **84** shown in FIG. **13** are applied in the fourth embodiment as well as the first embodiment, specific illustrations and descriptions of which are simply omitted here.

While the partially-open mode is provided by the tilt-up mechanism **64** in the above-described third embodiment, according to the fourth embodiment the front roof **4,** as one of the sub roof members, is movable in the vehicle longitudinal direction, so that when the front roof **4** is moved rearwardly from the full-closing state, the rear portion of the front roof **4** moves below the front portion of the rear roof **5** so as to provide further another type of partially-open mode (a so-called half-open mode).

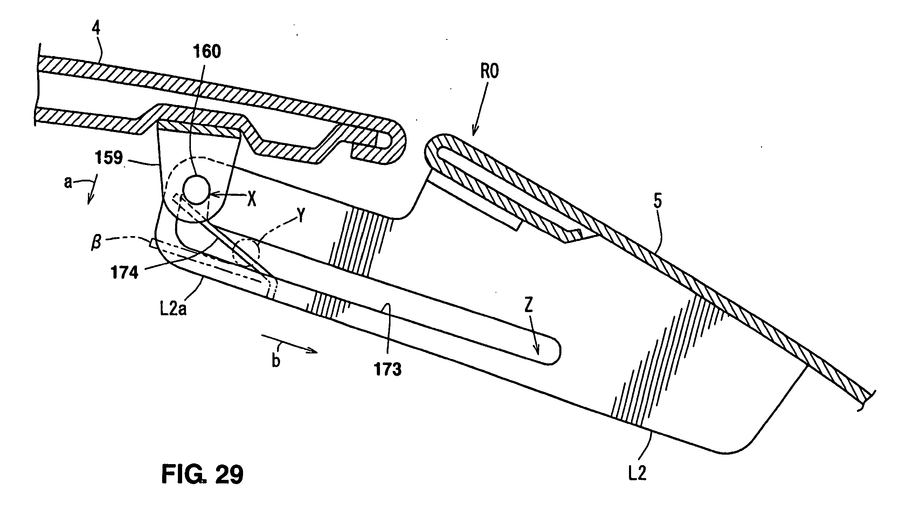

Accordingly, in the fourth embodiment, as shown in FIGS. **28** and **29****,** the extension portion **L2a** of the link **L2** at the rear roof **5** has a hook-shaped slot **173** which allows the front roof **4** to move longitudinally. Meanwhile, a bracket **159** attached to the rear lower face of the front roof **4** is formed substantially ina reverse-L shape in an elevation view, this bracket **159** is arranged on the inward side of the link **L2,** and a pin **160** provided at the bracket **159** is inserted into the above-described **slot 173.**

Further, a plate spring **174** (biasing member) is provided on the outward side, in the vehicle width direction, of the extension portion **L2a** of the link **L2.** This plate spring **174** functions to return the above-described pin **160** to its original position **X** from a stroke-end position **Z** by way of a position **Y** when the front roof **4** is moved to the full-closing position after the pin **160** is moved to its stoke-end position **Z** by way of its positions **X, Y.** Thus, the plate spring **174** biases the pin **160** projecting outwardly from the slot **173** toward the position **X** shown in FIG. **29****.**

Additionally, a grip **176** is attached to the lower position of the middle portion of the front roof **4** via a bracket **175** as shown in FIG. **28****.** This grip **176** is biased in a direction so that it is positioned along the lower face of the front roof **4,** and when used, this grip **176** is rotated to a position α illustrated by a broken line in this figure.

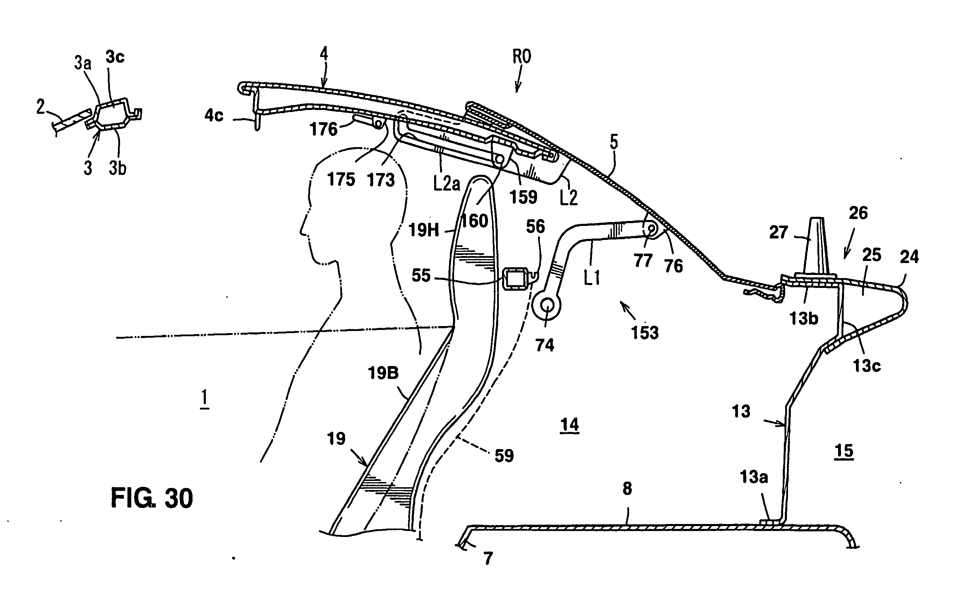

FIG. **28** shows the full-closing state of the roof member **RO,** and in order to make further another type of partially-open mode (so-called half-open mode) shown in FIG. **30** from this full-closing state, the door lock **89** (see FIG. **27****)** is unlocked and then the grip **176** is rotated from the position illustrated by the solid line to the position α illustrated by the broken line in FIG. **28****.** Next, by gripping the grip **76,** the front roof **4** and the pin **160** are moved downwardly in an arrow **a** direction, and then moved rearwardly in an arrow **b** direction in FIG. **29****.** Thereby, the pin **160** moves along the slot **173** from its original position **X** to its stroke end position **Z** by way of the middle position **Y.** Accordingly, the rear portion of the front roof **4** slides below the front portion of the rear roof **5,** so that further another type of partially-open mode, i.e., the so-called half-open mode, shown in FIG. **30** can be provided.

Meanwhile, in case the front roof **4** in the partially-open mode shown in FIG. **30** is returned to the full-closing state shown in FIG. **28****,** the pin **160** moves in the opposite direction to the above-described direction, and then when the pin **160** moves to the middle position **Y** from the stroke end position **Z,** the plate spring **174** moves to a position β shown by a two-dotted broken line, and thereby pushes the pin **160** up to the original position **X** with the spring's biasing force. Accordingly, there occurs no substantial gap (step) between the rear end of the font roof **4** and the front end of the rear roof **5** in the full-closing state of the roof member **RO** as shown in FIGS. **28** and **29****,** so that an appropriate design and a sealing function can be improved.

According to the fourth embodiment shown in FIGS. **28** through **32****,** one of the sub roof members (the front roof **4)** is movable in the vehicle longitudinal direction (see FIGS. **28** through **30****).** Thereby, the partially-open mode (see FIG. **30****)** can be secured when the sub roof member (front roof **4)** is moved, so that both of the outside-air induction or the ventilation of the vehicle compartment **1** and lighting adjustment can be achieved.

The present should not be limited to the above-described embodiments, and any other modifications or improvements can be applied within the scope of the present invention, as defined by the appended claims.

## Claims

1. A movable roof structure of a vehicle, comprising:
a roof member **(RO)** provided so as to be positioned in a closing state to cover over an upper part of a vehicle compartment (1) and an open state to open the upper part of the vehicle compartment **(1),** the roof member **(RO)** comprising a plurality of split sub roof members **(4, 5)** which are connected, at least one of which is made of a board-shaped hard roof member; the roof member **(RO)** being stored in a storage portion **(14)** at a rear part of the vehicle compartment **(1)** in a state in which the sub roof members **(4, 5)** are folded when being in the open state;
an operational member **(82)** to be operated by a passenger, the operational member **(82)** being provided at a front roof **(4)** of the sub roof members **(4, 5)** so as to transmit an opening-operational force or a closing-operation force by the passenger to the sub roof members **(4, 5)** for opening or closing the roof member **(RO),**
**characterised in that** the front roof **(4)** is movable in the vehicle longitudinal direction, so that when the front roof **(4)** is moved rearwardly from the closing state, a rear portion of the front roof **(4)** moves below a front portion of a rear roof **(5)** of the sub roof members **(4, 5).**

2. The movable roof structure of a vehicle of claim 1, further comprising a moving mechanism **(81)** provided to position the operational member (82) such that the operational member **(82)** is movable relatively to the roof member **(RO).**

3. The movable roof structure of a vehicle of any one or more of the preceding claims, wherein said moving mechanism **(81)** positions the operational member **(82)** such that the operational member **(82)** is movable relatively to the roof member **(RO)** substantially in a vehicle width direction.

4. The movable roof structure of a vehicle of any one or more of the preceding claims, wherein said operational member (82) comprises a cylindrical member **(82),** and said moving mechanism **(81)** comprises a shaft member **(81)** which is fixed at the front roof **(4)** of the sub roof members **(4, 5)** so as to extend substantially in the vehicle width direction and guide the cylindrical member **(82)** by being inserted into a central hole of the cylindrical member **(82).**

5. The movable roof structure of a vehicle of any one or more of the preceding claims, wherein the front roof **(4)** and the rear roof **(5)** are connected to each other, and wherein at least one of the front and rear roofs **(4, 5)** is preferably made of a hard roof member.

6. The movable roof structure of a vehicle of any one or more of the preceding claims, wherein means **(Z)** for allowing daylight to come into the vehicle compartment **(1)** is provided at least at part of said sub roof members **(4, 5)** and/or at least part of said sub roof members **(4, 5)** is made of a light-transparent material, preferably a flexible and light-transparent material, and/or the front roof **(4)** is made of a light-transparent hard roof member.

7. The movable roof structure of a vehicle of any one or more of the preceding claims, further comprising an assist mechanism **(80)** to assist an operational force by the passenger, wherein said assist mechanism **(80)** preferably assists the closing-operational force by the passenger for closing the roof member **(RO).**

8. The movable roof structure of a vehicle of claim 7, wherein said assist mechanism (80) comprises a biasing means **(80)** for assisting the closing-operational force by the passenger for closing the roof member **(RO).**

9. The movable roof structure of a vehicle of any one of the preceding claims, further comprising an open roof mechanism **(73; 153)** to provide a partially-open mode in which said roof member **(RO)** is partially open and held.

10. The movable roof structure of a vehicle of any one or more of the preceding claims, wherein said open roof mechanism **(73; 153)** stops moving of said roof member **(RO)** in the middle of opening or closing operation of the roof member **(RO),** preferably at any position.

11. The movable roof structure of a vehicle of any one or more of the preceding claims, further comprising an opening mechanism **(164)** configured to vertically move at least part of said roof member **(RO).**

12. A vehicle comprising a moveable roof structure of any one or more of the preceding claims.

13. A method of providing a movable roof structure of a vehicle, comprising the steps of:
providing a roof member **(RO)** so as to be positioned in a closing state to cover over an upper part of a vehicle compartment **(1)** and an open state to open the upper part of the vehicle compartment **(1),** the roof member **(RO)** comprising a plurality of split sub roof members **(4, 5)** which are connected, at least one of which is made of a board-shaped hard roof member; the roof member **(RO)** being stored in a storage portion **(14)** at a rear part of the vehicle compartment **(1)** in a state in which the sub roof members **(4, 5)** are folded when being in the open state;
providing an operational member **(82)** to be operated by a passenger at a front roof **(4)** of the sub roof members **(4, 5),** the operational member **(82)** being adapted to transmit an opening-operational force or a closing-operation force by the passenger to the sub roof members **(4, 5)** for opening or closing the roof member **(RO),**
wherein the front roof **(4)** is movable in the vehicle longitudinal direction, so that when the front roof **(4)** is moved rearwardly from the closing state, a rear portion of the front roof **(4)** moves below a front portion of a rear roof (5) of the sub roof members **(4, 5).**

14. The method of claim 13, further comprising the step of providing a moving mechanism **(81)** adapted to position the operational member **(82)** such that the operational member **(82)** is movable relatively to the roof member **(RO).**

## Patentansprüche

1. Bewegliche Dachstruktur eines Fahrzeugs, umfassend:
ein Dachglied (RO), das so vorgesehen ist, dass es in einem geschlossenen Zustand, um einen obere Teil eines Fahrzeuginnenraums (1) abzudecken, und einem offenen Zustand positioniert ist, um den oberen Teil des Fahrzeuginnenraums (1) zu öffnen bzw. freizugeben, wobei das Dachglied (RO) eine Mehrzahl von geteilten Unter- bzw. Teildachgliedern (4, 5) umfasst, die verbunden sind, von denen zumindest eines aus einem brettförmigen harten Dachglied besteht; wobei das Dachglied (RO) in einem Aufbewahrungsabschnitt (14) an einem hinteren Teil des Fahrzeuginnenraums (1) in einem Zustand aufbewahrt wird, in dem die Teildachglieder (4, 5) in dem offenen Zustand gefaltet bzw. geklappt sind;
ein Betätigungsglied (82), das von einem Fahrgast zu betätigen ist, wobei das Betätigungsglied (82) an einem vorderen Dach (4) der Teildachglieder (4, 5) vorgesehen ist, um eine Öffnungsbetätigungskraft oder eine Schließenbetätigungskraft von dem Fahrgast auf die Teildachglieder (4, 5) zum Öffnen oder Schließen des Dachglieds (RO) zu übertragen,
**dadurch gekennzeichnet, dass** das vordere Dach (4) in der Fahrzeuglängsrichtung beweglich ist, so dass, wenn das vordere Dach (4) aus dem geschlossenen Zustand nach hinten bewegt wird, sich ein hinterer Abschnitt des vorderen Dachs (4) unterhalb eines bzw. unter einen vorderen Abschnitt eines hinteren Dachs (5) der Teildachglieder (4, 5) bewegt.

2. Bewegliche Dachstruktur eines Fahrzeugs nach Anspruch 1, ferner umfassend einen sich bewegenden bzw. Bewegungsmechanismus (81), der vorgesehen ist, um das Betätigungsglied (82) so zu positionieren, dass das Betätigungsglied (82) relativ zu dem Dachglied (RO) beweglich ist.

3. Bewegliche Dachstruktur eines Fahrzeugs nach einem oder mehreren der vorhergehenden Ansprüche, wobei der Bewegungsmechanismus (81) das Betätigungsglied (82) so positioniert, dass das Betätigungsglied (82) relativ zu dem Dachglied (RO) im Wesentlichen in einer Fahrzeugbreitenrichtung beweglich ist.

4. Bewegliche Dachstruktur eines Fahrzeugs nach einem oder mehreren der vorhergehenden Ansprüche, wobei das Betätigungsglied (82) ein zylindrisches Glied (82) umfasst und wobei der Bewegungsmechanismus (81) ein Schaft- bzw. Wellenglied (81) umfasst, das an dem vorderen Dach (4) der Teildachglieder (4, 5) fixiert bzw. befestigt ist, um sich im Wesentlichen in der Fahrzeugbreitenrichtung zu erstrecken und das zylindrische Glied (82) durch Eingesetztwerden in ein zentrales Loch des zylindrischen Glieds (82) zu führen.

5. Bewegliche Dachstruktur eines Fahrzeugs nach einem oder mehreren der vorhergehenden Ansprüche, wobei das vordere Dach (4) und das hintere Dach (5) miteinander verbunden sind und wobei zumindest eines des vorderen und des hinteren Dachs (4, 5) vorzugsweise aus einem harten Dachglied besteht.

6. Bewegliche Dachstruktur eines Fahrzeugs nach einem oder mehreren der vorhergehenden Ansprüche, wobei ein Mittel (Z) zum Erlauben, dass Tageslicht in den Fahrzeuginnenraum (1) gelangt, an zumindest einem Teil der Teildachglieder (4, 5) vorgesehen ist und/oder zumindest ein Teil der Teildachglieder (4, 5) aus einem lichtdurchlässigen Material, vorzugsweise einem flexiblen und lichtdurchlässigen Material besteht, und/oder das vordere Dach (4) aus einem lichtdurchlässigen harten Dachglied besteht.

7. Bewegliche Dachstruktur eines Fahrzeugs nach einem oder mehreren der vorhergehenden Ansprüche, ferner umfassend einen Unterstützungsmechanismus (80), um eine Betätigungskraft durch den Fahrgast zu unterstützen, wobei der Unterstützungsmechanismus (80) vorzugsweise die Schließbetätigungskraft durch den Fahrgast zum Schließen des Dachglieds (RO) unterstützt.

8. Bewegliche Dachstruktur eines Fahrzeugs nach Anspruch 7, wobei der Unterstützungsmechanismus (80) ein Vorspannglied (80) zum Unterstützen der Schließbetätigungskraft durch den Fahrgast zum Schließen des Dachglieds (RO) umfasst.

9. Bewegliche Dachstruktur eines Fahrzeugs nach einem oder mehreren der vorhergehenden Ansprüche, ferner umfassend einen Offendachmechanismus (73; 153) zum Bereitstellen eines Teilweise-Offen-Modus, in dem das Dachglied (RO) teilweise offen und gehalten ist.

10. Bewegliche Dachstruktur eines Fahrzeugs nach einem oder mehreren der vorhergehenden Ansprüche, wobei der Offendachmechanismus (73; 153) das Bewegen des Dachglieds (RO) in der Mitte des Öffnen- oder Schließen-Vorgangs des Dachglieds (RO) vorzugsweise an jeder Position stoppt.

11. Bewegliche Dachstruktur eines Fahrzeugs nach einem oder mehreren der vorhergehenden Ansprüche, ferner umfassend einen Öffnungsmechanismus (164), der konfiguriert ist, zumindest einen Teil des Dachglieds (RO) vertikal zu bewegen.

12. Fahrzeug, umfassend eine bewegliche Dachstruktur nach einem oder mehreren der vorhergehenden Ansprüche.

13. Verfahren zum Bereitstellen einer beweglichen Dachstruktur eines Fahrzeugs, umfassend die Schritte:
Bereitstellen eines Dachglieds (RO), so dass es in einem geschlossenen Zustand, um einen obere Teil eines Fahrzeuginnenraums (1) abzudecken, und einem offenen Zustand positioniert ist, um den oberen Teil des Fahrzeuginnenraums (1) zu öffnen bzw. freizugeben, wobei das Dachglied (RO) eine Mehrzahl von geteilten Unter- bzw. Teildachgliedern (4, 5) umfasst, die verbunden sind, von denen zumindest eines aus einem brettförmigen harten Dachglied besteht; wobei das Dachglied (RO) in einem Aufbewahrungsabschnitt (14) an einem hinteren Teil des Fahrzeuginnenraums (1) in einem Zustand aufbewahrt wird, in dem die Teildachglieder (4, 5) in dem offenen Zustand gefaltet bzw. geklappt sind;
Bereitstellen eines Betätigungsglieds (82), das von einem Fahrgast zu betätigen ist, an einem vorderen Dach (4) der Teildachglieder (4, 5), wobei das Betätigungsglied (82) angepasst ist, eine Öffnungsbetätigungskraft oder eine Schließenbetätigungskraft von dem Fahrgast auf die Teildachglieder (4, 5) zum Öffnen oder Schließen des Dachglieds (RO) zu übertragen,
wobei das vordere Dach (4) in der Fahrzeuglängsrichtung beweglich ist, so dass, wenn das vordere Dach (4) aus dem geschlossenen Zustand nach hinten bewegt wird, sich ein hinterer Abschnitt des vorderen Dachs (4) unterhalb eines bzw. unter einen vorderen Abschnitt eines hinteren Dachs (5) der Teildachglieder (4, 5) bewegt.

14. Verfahren nach Anspruch 13, ferner umfassend den Schritt des Bereitstellens eines sich bewegenden bzw. Bewegungsmechanismus (81), der angepasst ist, das Betätigungsglied (82) so zu positionieren, dass das Betätigungsglied (82) relativ zu dem Dachglied (RO) beweglich ist.

## Revendications

1. Structure de toit mobile d'un véhicule comprenant :
un élément de toit (RO) prévu de manière à être positionné dans un état de fermeture pour recouvrir une partie supérieure d'un habitacle de véhicule (1) et un état ouvert pour ouvrir la partie supérieure de l'habitacle de véhicule (1), l'élément de toit (RO) comprenant une pluralité d'éléments de toit secondaires séparés (4, 5) qui sont connectés dont au moins un est réalisé en un élément de toit dur en forme de panneau ; l'élément de toit (RO) étant stocké dans une portion de stockage (14) au niveau d'une partie arrière de l'habitacle de véhicule (1) dans un état dans lequel les éléments de toit secondaires (4, 5) sont pliés lorsqu'ils sont dans l'état ouvert ;
un élément opérationnel (82) devant être opéré par un passager, l'élément opérationnel (82) étant prévu au niveau d'un toit avant (4) des éléments de toit secondaires (4, 5) de manière à transmettre une force opérationnelle d'ouverture ou une force d'opération de fermeture par le passager aux éléments de toit secondaires (4, 5) pour l'ouverture ou la fermeture de l'élément de toit (RO),
**caractérisée en ce que** le toit avant (4) est mobile dans la direction longitudinale du véhicule de sorte que, lorsque le toit avant (4) est déplacé vers l'arrière depuis l'état de fermeture, une portion arrière du toit avant (4) se déplace en dessous d'une portion avant d'un toit arrière (5) des éléments de toit secondaires (4, 5).

2. Structure de toit mobile d'un véhicule selon la revendication 1, comprenant en outre un mécanisme de déplacement (81) prévu pour positionner l'élément opérationnel (82) de sorte que l'élément opérationnel (82) est mobile par rapport à l'élément de toit (RO).

3. Structure de toit mobile d'un véhicule selon l'une quelconque ou plusieurs des revendications précédentes, dans laquelle ledit mécanisme de déplacement (81) positionne l'élément opérationnel (82) de sorte que l'élément opérationnel (82) est mobile par rapport à l'élément de toit (RO) essentiellement dans un sens de la largeur du véhicule.

4. Structure de toit mobile d'un véhicule selon l'une quelconque ou plusieurs des revendications précédentes, dans laquelle ledit élément opérationnel (82) comprend un élément cylindrique (82) et ledit mécanisme de déplacement (81) comprend un élément d'arbre (81) qui est fixé au toit avant (4) des éléments de toit secondaires (4, 5) de manière à s'étendre essentiellement dans le sens de la largeur du véhicule et guider l'élément cylindrique (82) en étant inséré dans un orifice central de l'élément cylindrique (82).

5. Structure de toit mobile d'un véhicule selon l'une quelconque ou plusieurs des revendications précédentes, dans laquelle le toit avant (4) et le toit arrière (5) sont connectés l'un à l'autre et dans laquelle au moins un des toits avant et arrière (4, 5) est de préférence réalisé en un élément de toit dur.

6. Structure de toit mobile d'un véhicule selon l'une quelconque ou plusieurs des revendications précédentes, dans laquelle un moyen (Z) pour permettre à la lumière du jour d'entrer dans l'habitacle de véhicule (1) est prévu au moins sur une partie desdits éléments de toit secondaires (4, 5) et/ou au moins une partie desdits éléments de toit secondaires (4, 5) est fabriquée en un matériau transparent à la lumière, de préférence un matériau souple et transparent à la lumière, et/ou le toit avant (4) est réalisé en un élément de toit dur transparent à la lumière.

7. Structure de toit mobile d'un véhicule selon l'une quelconque ou plusieurs des revendications précédentes, comprenant en outre un mécanisme d'aide (80) pour aider une force opérationnelle par le passager, dans laquelle ledit mécanisme d'aide (80) aide de préférence la force opérationnelle de fermeture par le passager pour fermer l'élément de toit (RO).

8. Structure de toit mobile d'un véhicule selon la revendication 7, dans laquelle ledit mécanisme d'aide (80) comprend un moyen d'inclinaison (80) pour aider la force opérationnelle de fermeture par le passager pour fermer l'élément de toit (RO).

9. Structure de toit mobile d'un véhicule selon l'une quelconque ou plusieurs des revendications précédentes, comprenant en outre un mécanisme de toit ouvert (73 ; 153) pour fournir un mode partiellement ouvert dans lequel ledit élément de toit (RO) est partiellement ouvert et maintenu.

10. Structure de toit mobile d'un véhicule selon l'une quelconque ou plusieurs des revendications précédentes, dans laquelle ledit mécanisme de toit ouvert (73 ; 153) arrête le déplacement dudit élément de toit (RO) au milieu de l'opération d'ouverture ou de fermeture de l'élément de toit (RO), de préférence en toute position.

11. Structure de toit mobile d'un véhicule selon l'une quelconque ou plusieurs des revendications précédentes, comprenant en outre un mécanisme d'ouverture (164) configuré pour déplacer verticalement au moins une partie dudit élément de toit (RO).

12. Véhicule comprenant une structure de toit mobile selon l'une quelconque ou plusieurs des revendications précédentes.

13. Procédé de fourniture d'une structure de toit mobile d'un véhicule, comprenant les étapes consistant à :
fournir un élément de toit (RO) de manière à être positionné dans un état de fermeture pour recouvrir une partie supérieure d'un habitacle de véhicule (1) et un état ouvert pour ouvrir la partie supérieure de l'habitacle de véhicule (1), l'élément de toit (RO) comprenant une pluralité de éléments de toit secondaires séparés (4, 5) qui sont connectés dont au moins un est réalisé en un élément de toit dur en forme de panneau ; l'élément de toit (RO) étant stocké dans une portion de stockage (14) au niveau d'une partie arrière de l'habitacle de véhicule (1) dans un état dans lequel les éléments de toit secondaires (4, 5) sont pliés lorsqu'ils sont dans l'état ouvert ;
fournir un élément opérationnel (82) devant être opéré par un passager au niveau d'un toit avant (4) des éléments de toit secondaires (4, 5), l'élément opérationnel (82) étant adapté à transmettre une force opérationnelle d'ouverture ou une force d'opération de fermeture par le passager aux éléments de toit secondaires (4, 5) pour l'ouverture ou la fermeture de l'élément de toit (RO),
dans lequel le toit avant (4) est mobile dans la direction longitudinale du véhicule de sorte que, lorsque le toit avant (4) est déplacé vers l'arrière depuis l'état de fermeture, une portion arrière du toit avant (4) se déplace en dessous d'une portion avant d'un toit arrière (5) des éléments de toit secondaires (4, 5).

14. Procédé selon la revendication 13, comprenant en outre l'étape consistant à fournir un mécanisme de déplacement (81) adapté à positionner l'élément opérationnel (82) de sorte que l'élément opérationnel (82) est mobile par rapport à l'élément de toit (RO).
